# EUROPEAN PATENT SPECIFICATION

(11) **EP 0 904 647 B1**
(45) Date of publication and mention of the grant of the patent: **14.12.2005**
(21) Application number: 97926107.0
(22) Date of filing: 12.06.1997
(51) Int. Cl.: H04L 12/56, H04Q 11/04

(54) **ATM NETWORK MANAGEMENT**
ATM NETZWERKVERWALTUNG
GESTION DE RESEAU EN MODE DE TRANSFERT ASYNCHRONE

(30) Priority: 13.06.1996 GB 9612363
(43) Date of publication of application: 31.03.1999
(73) Proprietor: BRITISH TELECOMMUNICATIONS public limited company, London EC1A 7AJ (GB)
(72) Inventor: DAVISON, Robert, George, Suffolk IP4 2RE (GB); AZMOODEH, Manoochehr, Ipswich, Suffolk IP5 7YA (GB); HARDWICKE, James, John, Suffolk IP3 9AH (GB)
(74) Representative: Williamson, Simeon Paul
(86) International application number: PCT/GB1997/001591
(87) International publication number: WO 1997/048214

(56) References cited:
- US-A- 5 347 511
- IEICE TRANSACTIONS ON COMMUNICATIONS, vol. E77-B, no. 1, 1 January 1994, pages 5-14, XP000439972 KAWAMURA R ET AL: "FAST VP-BANDWIDTH MANAGEMENT WITH DISTRIBUTED CONTROL IN ATM NETWORKS"
- SERVING HUMANITY THROUGH COMMUNICATIONS. SUPERCOMM/ICC, NEW ORLEANS, MAY 1 - 5, 1994, vol. VOL. 1, no. -, 1 May 1994, INSTITUTE OF ELECTRICAL AND ELECTRONICS ENGINEERS, pages 44-50, XP000438881 BOLLA R ET AL: "A DISTRIBUTED ROUTING AND ACCESS CONTROL SCHEME FOR ATM NETWORKS"
- IEICE TRANSACTIONS ON COMMUNICATIONS, vol. E75-B, no. 10, 1 October 1992, pages 1071-1080, XP000324955 LOGOTHETIS M ET AL: "CENTRALIZED VIRTUAL PATH BANDWIDTH ALLOCATION SCHEME FOR ATM NETWORKS"

## Description

The present invention concerns the performance management and traffic control of what are known as asynchronous transfer mode (ATM) networks.

The arrival of broadband networks heralded by the introduction of optical fibres has substantially increased the range and nature of data which can be transmitted over telephone lines. Thus while some users may be content with merely maintaining voice connections at constant bit rates, other users might wish to have access to other connection types such as video and data at variable bit rates. Thus users now require the ability to select from a number of connection types in accordance with their needs. ATM networks have been developed to meet this demand. In a typical case a user can choose between three potential connection types, namely the already mentioned two megabit voice links, a variable bandwidth link peaking at 10 megabits and with a mean of 5 megabits, and a third variable bandwidth link peaking at 20 megabits and having a mean of 8 megabits. The second of these connection types can be used for high speed data transfer and the third for the transmission of video images. It will however be appreciated that the present invention is not limited to any particular set of connection types.

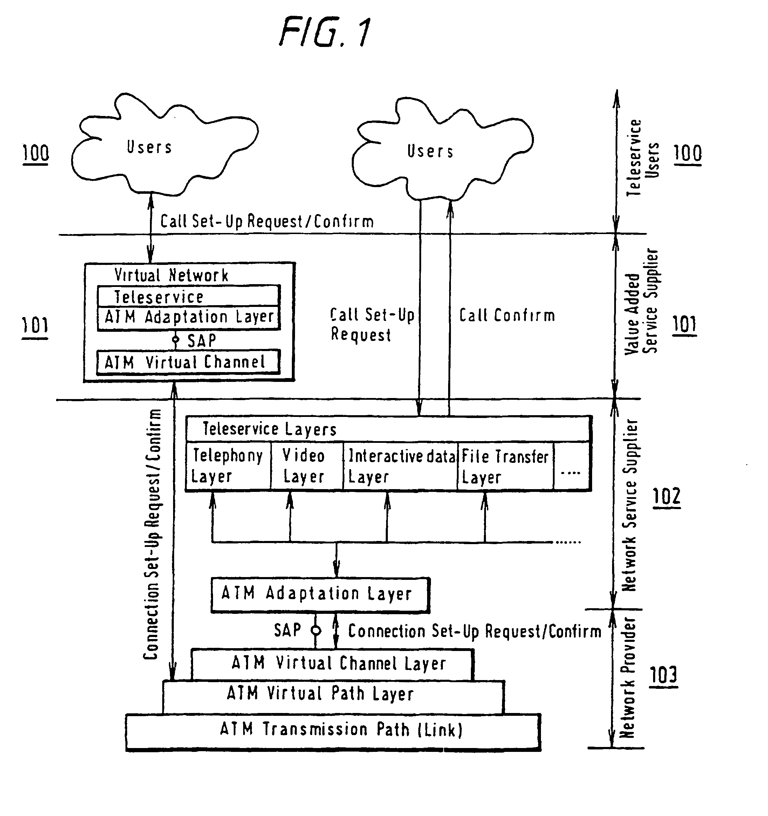

Figure 1 of the accompanying drawings is a functional representation of user and service interaction in a typical ATM network environment. Layer 100 represents the users and layer 101 represents suppliers who provided value added services to users. Layer 102 gives some examples of value added network services such as additional telephoning features, provision of video data, transfer of data files and the like, and layer 103 shows the various functional layers of the actual ATM network.

The basic unit of an ATM network is the ATM switch. Such a switch will be described in greater detail hereinafter but each switch supports several hundred users and provides the requisite links between the users and other ATM switches in the network. In order to maximise the potential bandwidth available to users the telecommunications industry has developed what are known as virtual path (VP) networks. VP networks differ in two ways from the traditional telephone network. In a traditional telephone network when a user wishes to access another user a fixed channel is established via the various nodes and switches and this channel either has the ability to carry the data or not. In a VP network each user is allocated a bandwidth appropriate to his assumed needs in the various connection types and the ATM network management provides bandwidth by selecting a route from all of the available paths in the network. Of course each user will have a usage pattern which will be only partly predictable. It will be appreciated that it would be uneconomic to provide each user all the time with all of the maximum bandwidth that that user might require. Accordingly, in a VP network the sum of the nominal bandwidths allocated to the users connected in the network is substantially greater than the total bandwidth of the network. Thus if every user utilised its bandwidth to the maximum at the same time the network would be unable to cope. Accordingly, a major problem with the management of ATM networks involving virtual paths is to balance the requirement to utilise the capacity of the network to its maximum whilst at the same time maintaining the quality of service (QoS) offered to the subscribers to the network. Fundamental attributes of QoS are delay, loss and delay variation.

When discussing ATM networks certain terms have become standard. Thus a link is an ATM transmission path which provides bandwidth between transmission end points. Normally such a link will be a fibre optic one. A number of transmission paths and transmission end points form the transmission capability of the network which is provided to the virtual path (VP) level. The transmission end points are ATM switches which route traffic over VP links.

A concatenation of VP links is terminated by VP connection end points to form VP connections which are simply called VPs in the remainder of this specification. VPs enable the ATM transport network to provide either teleservices to end users via the network service supplier layer 103 or raw bandwidth to value added service suppliers at layer 102. In each of these cases, a set of VPs are provided to the VC level such that at this level, VPs are interconnected by VC links. The resulting concatenation of VC links form a VC connection which are used to transport these teleservices. Nodes, links and VP's can all be considered as network resources and in a typical network each is represented by a distributed object. Thus information concerning the network can be obtained by calling function acting on these distributed objects. The importance of this arrangement to the present invention will become apparent hereinafter.

More than one connection is usually used to provide an end-to-end service association or call to a user/customer of the network. Each of the connections in a call have certain characteristics such as bandwidth utilisation profile and performance targets that it shares with other connections of the same type.

The performance management of a network layer can be broadly classified into two groups - Network Resource Management (NRM) and Traffic Control Management (TCM). NRM deals with VP bandwidth management, VP routing, virtual channel (VC) routing strategies, VP and link load balancing, VP Topology Management and quality of service (QoS) verification. However the performance management in ATM networks is an extremely complex problem due to many factors. Amongst these are the fact that each user has the potential of a plurality of connection types and because of the VP model of the network the combination of the number of different connection types with the number of potential virtual paths between the ATM switches in the network rapidly becomes extremely large. Adding to the problem is the variability of the traffic characteristics and controls at many levels together with the necessity to plan ahead for substantially larger networks. Thus in an ATM network Virtual Path Bandwidth Management (VPBM) is both a very important function and one which in practice is difficult to carry out.

In dealing with the above problems in VPBM, it must be borne in mind that the theory of performance management functionality as part of an integrated Telecommunications Management Network (TMN) using ATM switches and virtual paths is in general not well understood. This contrasts with the well-founded mathematical models such as queuing theory, etc., for assessing and analysing the performance of orthodox telephone networks.

To summarise, virtual path bandwidth management as applied to ATM networks is a network management function which aims to ensure that virtual paths have the right size, allocation and route. The difficulties of carrying out this function include:
the vast number of virtual paths needed for future public ATM networks leading to a need for scalable algorithms and implementations;
impossibility of accurate traffic models for future services - ATM networks allow applications to produce traffic at continuously varying rates preventing accurate models needed for optimal solutions and changing business requirements. Thus, network providers want to be able to easily modify how they control their networks. For example a provider may want to offer more reliable QoS, with corresponding lower network utilisation, at premium times than at economy times. This requires algorithms for bandwidth tuning which can be adapted to change policies. Additionally there is a lack of accurate traffic models on which such algorithms can be based.

A known approach in dealing with the problem of monitoring traffic in ATM networks and adaptively changing the bandwidths of VPs to accommodate the required load of VCs is a centralised one in which for bandwidth allocation only the VP termination points are involved. The telecommunication management network (TMN) decides the bandwidth required and downloads this information to the VP termination points. However with increasing network sizes the computing power required to carry out effective adaptation of the bandwidth allocation becomes too great and the time penalties involved become too severe to enable the network to be updated except at relatively long intervals and with great effort.

An article entitled "Fast VP-Bandwidth Measurement with Distributed Control in ATM Networks" in IEICE Transactions on Communications, vol E77-B, No 1, 1 January 1994 pages 5-14 discloses a management system where the control is carried out within the switches. A similar switch based system is disclosed in an article entitled "Serving Humanity Through Communications", Supercomm/ICC New Orleans, May 1-5, 1994, Institute of Electrical and Electronics Engineers, pages 44-50.

Neither of these documents provides a solution to the problems set out hereinbefore.

The present invention is concerned with providing a solution to the above problems. Thus one concern of the present invention is to provide a system for managing bandwidth in an ATM network.

However a solution concerning bandwidth cannot by itself deal with all potential problems of ATM management. A major problem can arrive when the distributed agents have to deal with the following situation. This is when for a particular link:
a) The link capacity has all been reserved by the VP's it carries.
b) All the VPs it carries are using all their reserved bandwidth.
c) One or more of those VPs require more bandwidth than their currently reserved bandwidth.

Thus the present invention is concerned with providing a generic approach to a range of problems in ATM management.

In accordance with one aspect of the present invention there is provided a management system as set out in claim 1.

In accordance with a second aspect of the present invention there is provided a method of managing an ATM virtual path network as set out in claim 15.

In order that the present invention may be more readily understood embodiments thereof will now be described by way of example and with reference to the remainder of accompanying drawings, in which:
Figure 2 is a diagrammatic representation of a basics ATM network;
Figure 3 is a diagrammatic view of an ATM switch;
Figure 4 is a diagrammatic representation of three intelligent agent types which comprise a first embodiment of the present invention;
Figure 5 shows flow diagrams of two rules which control the behaviour of one of the agents shown in Figure 4;
Figures 6A, 6B and 6C show flow diagrams of three rules which control the behaviour of a second agent of the three agents shown in Figure 4;
Figures 7A and 7B show flow diagrams of two rules which control the behaviour of the third of the agents shown in Figure 4;
Figure 8 shows a sequence of messages used in tuning the bandwidth of a virtual path;
Figure 9 is a diagrammatic representation of two intelligent agent types which comprise a second embodiment of the present invention;
Figure 10 is a flow diagram of a rule which controls the behaviour of one of the agents of Figure 9;
Figures 11 and 12 are flow diagrams of two rules which control the behaviour of the second of the agents of Figure 9;
Figures 13a and 13b are network diagrams illustrating the operation of the agents of Figure 9;
Figure 14 is a sequence of messages used in system Topology Management; and
Figure 15 is a sequence of messages in a third embodiment in which bandwidth management and Topology Management operate in parallel.

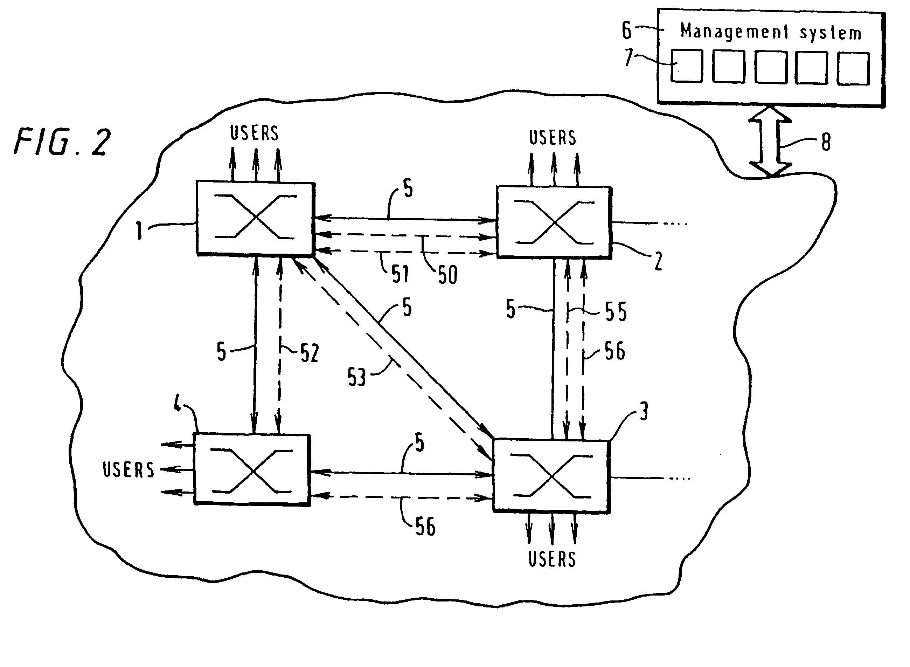

Referring now to Figure 2 of the accompanying drawings, this shows an ATM network consisting of four ATM switches 1, 2, 3 and 4. In the present embodiment high bandwidth links are provided between the switches by optical fibres indicated at 5. It will be seen that switch 1 is connected directly to switches 2 and 4 and also to switch 3, whilst switches 2 and 4 are respectively connected to 1 and 3. As already mentioned, each switch will support several hundreds of users and each user in this embodiment has the potentiality of three different connection types with each connection type having a different bandwidth allocated by the VP bandwidth naturally. Thus in the present embodiment each of the links 5 is capable of carrying the three different connection types which have already been discussed. The number and range of connection types can, of course, be varied. In the Figure numerals 50 to 56 represent VPs carried over the links 5. VP56 can be considered as providing a direct path between switches 2 and 4. In a physical sense VP56 passes through switch 3 but cannot terminate at switch 3. Thus in effect it does provide a direct path between switch 2 and switch 4. The provision of VPCs of this type is a decision of the management function and will depend on, for example, expected traffic volumes.

A management system is indicated at 6. This system comprises a plurality of programmable computers 7 and communicates with the network via an interface indicated at 8. This interface can comprise one or more VPs or virtual circuits. The function of the programmable computers will be described in greater detail hereinafter. It is conceivable that a single computer can be used in the management system. The number and range of connection types can be varied.

As an immediate example of the complexity which can arise with much larger ATM networks, it will be appreciated that using by VPs a user at switch 1 can access a user at switch 3 over a large number of different links and that if even this simple network was increased by the addition of a single additional ATM switch the number of potential routes would increase exponentially.

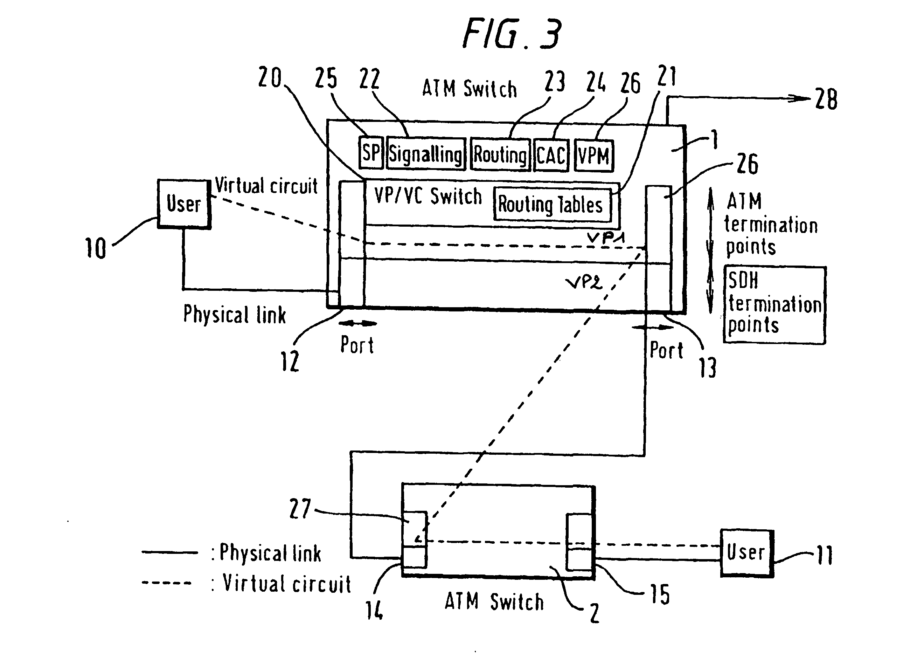

Referring now to Figure 3 of the accompanying drawings, this shows the functional architecture of an ATM switch. The physical structures of such switches are well-known in the art and extremely complex and accordingly will not be discussed in detail. Figure 3 shows switch 1 linked to switch 2 of Figure 2. A first user is indicated at 10, this user being physically linked to switch 1, and a second user is shown at 11, the second user being physically linked to switch 2. The physical links between user 10 and switch 1 are terminated by a port 12, the physical link between switch 1 and switch 2 is terminated by respective ports 13 and 14 and the physical link between user 11 and switch 2 is terminated by a port 15. Ports perform the function of line termination so that ATM cells arriving at a port are delivered to the switch and likewise the cells leaving the switch are delivered to the port for transmission. As the two switches are effectively identical only the functions available in switch 1 will be described. Thus at the switch VP/VC switching is carried out using appropriate routing tables in the figure the VP/VC switching function is indicated at 20 and the routing tables are indicated at 21. The call handling functions of the switch comprise signalling and routing strategies for VC routings and these are shown at 22 and 23. The connection acceptance control function (CAC) is shown at 24 and is responsible for accepting or rejecting a new connection onto the network depending on the available capacity left in the network. The source policing (SP) function shown at 25 ensures that users do not go above their contracted traffic volumes. Finally, the virtual path management (VPM) functions 26 of the switch are responsible for:
determining if there is sufficient bandwidth on a VP for a connection;
monitoring VP bandwidths thresholds so as to provide the data for VP tuning functions;
to allocate and de-allocate bandwidth at call set-up and call release time;
to respond to network management requests for creating and deleting VPs and for changing their properties such as bandwidth, etc.

In order to carry out these functions the switch is connected via a path indicated at 28 to the management system 6.

In the switch shown in Figure 3 it is assumed that the Synchronous Digital Hierarchy (SDH) will be used as the transport layer of the ATM network being described. Thus in the embodiment being described the ATM cells generated at the ATM layer will be loaded into appropriate SDH frames before being transmitted over SDH networks to the destination switch. Conversely, upon receiving SDH frames by SDH termination points they are unloaded into ATM cells and delivered to the ATM switching functions. In Figure 3 the termination points 26 and 27 of the two switches are shown as being divided into ATM termination points and SDH termination points to indicate this shared functionality.

There are two stages which are followed when a user sets up a connection or a call to another user. Firstly, using signalling, the user requests a connection from the network. The network switch to which the user is connected, in this case switch 1, using the call handling functions, VPM and CAC and by talking to other switches on the path to the destination, allocates a virtual circuit by giving it a VP and VC address and updating the routing tables in the switches. In Figure 3 the dotted lines VP1 and VP2 show a virtual circuit set up between the two end points as represented by the users. As these are virtual paths it will be appreciated that the actual physical links along which the data will pass from one user to another need not be the direct one between switch 1 and switch 2.

Once a connection has been set up between the two end points as represented by the users individual ATM cells are sent from one user to another. As cells enter the switch they are processed for switching. The VP and VC address of a cell is picked up, and using the routing tables in the switch, the destination port for that cell and the new VP and VC addresses are determined. A new cell is created with the new VP and VC address and added to the output port.

Finally, when the user finishes the transmission of ATM cells, it asks the network to end the connection using the signalling messages. The switches thus delete the connection from their routing tables etc. and tear down the connection.

Effectively the SDH layer will be transparent to the ATM switching routines.

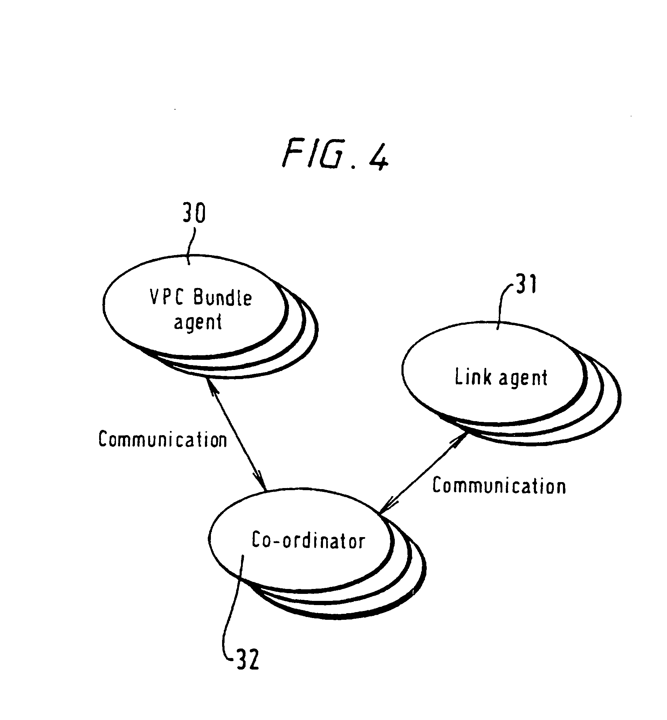

In the embodiment of the invention being described no attempt is made to provide a single algorithm or control function which is utilised by a central management structure to control bandwidth allocation to the virtual paths in order to match the allocated bandwidths to network conditions and to management policy. Accordingly the present embodiment utilises a distributed set of autonomous objects, which will hereafter be referred to as agents, in the programmable computers 7 located in the management system 6. Additionally in the present embodiment the agents have been kept very simple by having no state and no learning capability. One of the benefits of this simplicity is that the quantity and complexity of code required in the running of the system will be small. The complexity of behaviour required to manage a large network emerges from the interaction between the agents. In the present embodiment a set of agents which dynamically tune the VP network based on network performance measurements fall into three categories or sets. These three categories are diagrammatically represented in Figure 4. The first category of agent is shown at 30 and will be referred to as VPC bundle agents which are responsible for a set of VPCs and their supporting VP links. The second type of agent is shown at 31 and is referred to as a link agent which is responsible for a physical link and the third type of agent is shown at 32 and is referred to as a coordinator agent which is responsible for coordinating actions taken in response to a network condition to prevent the other agents from performing conflicting actions.

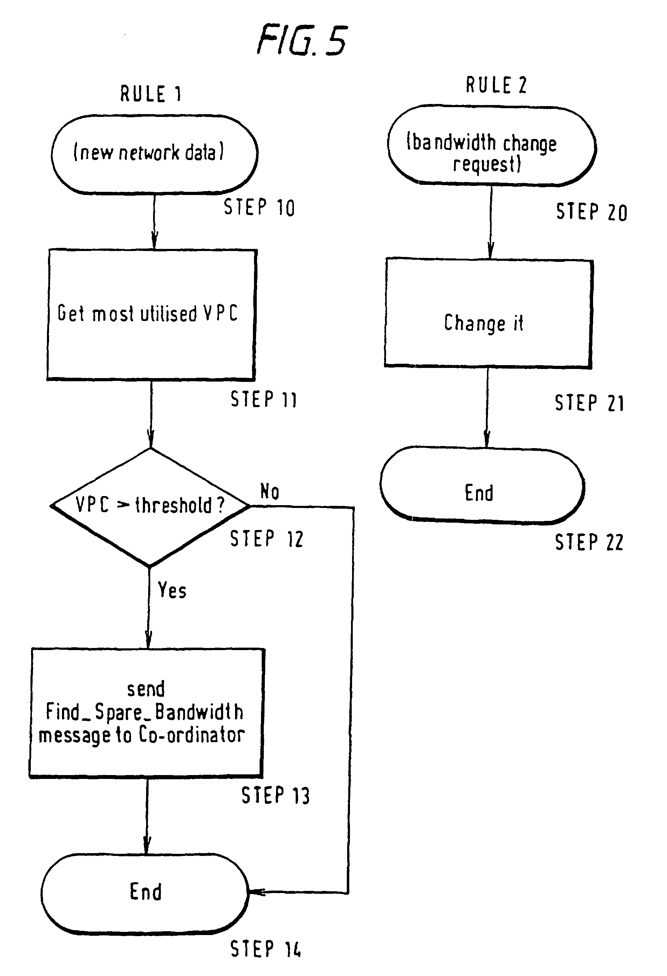

The behaviour of each of these three agents will now be described with regard to Figures 5, 6 and 7.

The first of the agents to be described is the VPC bundle agent 30. The behaviour of this agent is described by the two rules shown in Figure 5 of the accompanying drawings. The first rule shown in Figure 5 is rule 1 and this rule fires at step 10 when new data arrives from the network. Essentially this rule detects if a problem is present and if this is the case requests the assistance of a coordinator agent 32. At step 11 the rule acts to find the VPC which is the most heavily utilised. At step 12 the rule checks if the utilisation level of the most heavily utilised VPC is over a predetermined threshold or not. If the answer is "Yes" a problem does exist and a request is sent at step 13 to the coordinator agent to find spare bandwidth. If the answer is "No" there is no problem and the rule ends with step 14.

Rule 2 of Figure 5 fires if the VPC bundle agent 30 receives a request to change the bandwidth of a VPC. Such a request is received at Step 20, carried out at Step 21 and the rule ends with Step 22.

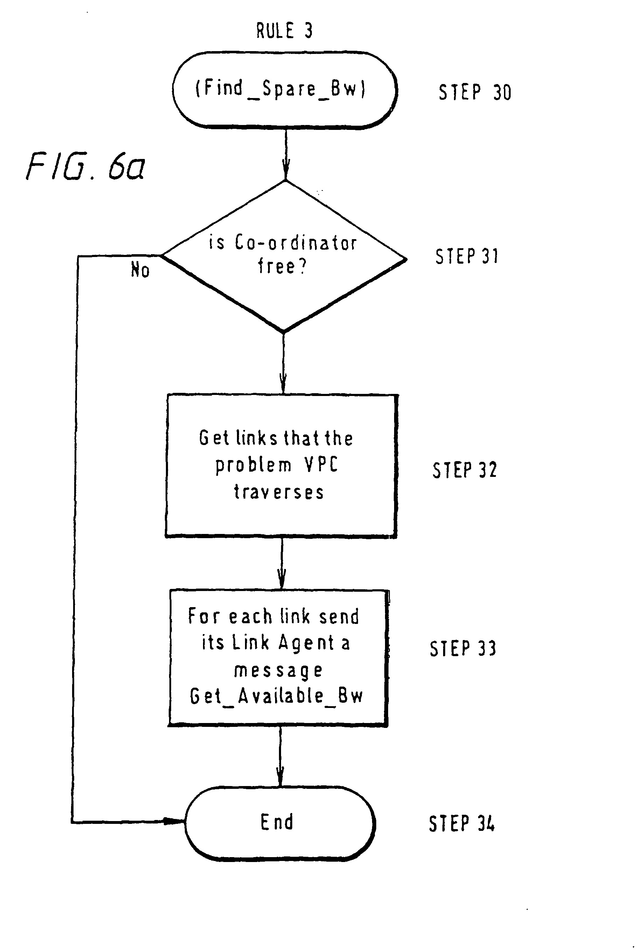

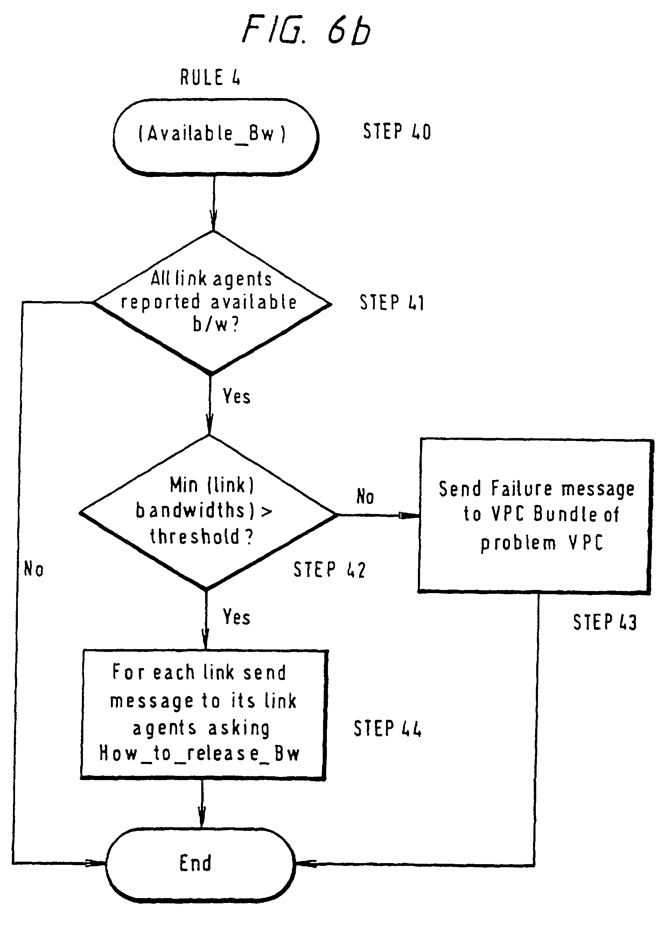

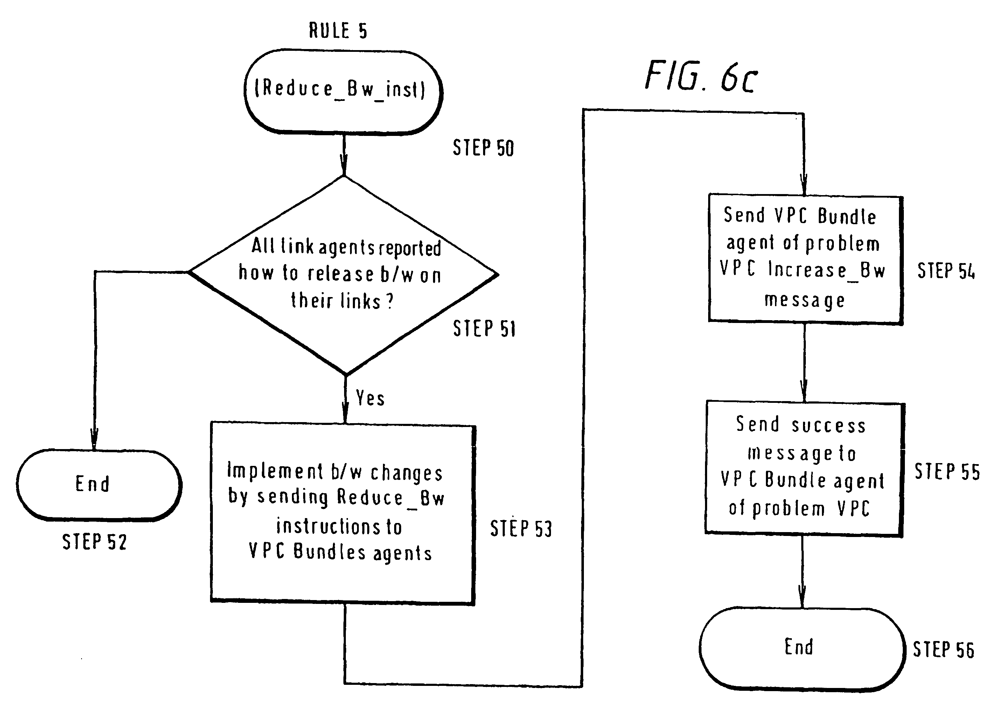

The behaviour of the coordinator agent 32 is described by the three rules 3, 4 and 5 shown in Figure 6 of the accompanying drawings. The first rule in Figure 6 is Rule 3 which fires at step 30 when new data is received from the network via a VPC bundle agent 30 in response to that agent having received a positive answer at step 12 of Rule 1 and having sent a request for spare bandwidth in accordance with step 13 of that rule. In response to the received request for more bandwidth, the coordinator agent determines at Step 31 whether or not it is free to assist. If it is free the coordinator agent obtains at Step 32 the links that the problem VPC traverses. Once the links have been obtained by Step 32 the coordinator agent queries the corresponding link agents to report to it any available bandwidth. This is done in Step 33. Rule 3 ends either with the decision at Step 31 that the coordinator is not free or with the request to the link agents in Step 33. The termination of the rule is shown at Step 34. The second rule associated with each coordinator agent is Rule 4 of Figure 6 and this rule fires when the coordinator agent receives an event stating how much bandwidth is available on a particular link. Step 41 of Rule 4 is a decision as to whether or not all of the link agents have reported their available bandwidth. If all the agents do not report then the rule ends at Step 45. However, if all agents have reported the next step, Step 42, involves a decision by the coordinator agent as to whether or not the bandwidth reported by the links is sufficient to solve the problem. If the answer to Step 42 is "Yes" the coordinator agent asks the link agents for instructions as to how the bandwidth can be recovered. This is shown in Step 44. If the answer at Step 42 is "No", Step 43 sends a failure message to the VPC bundle agent of the problem VPC. In either case the rules end at Step 45. The third rule associated with the coordinator agent 32 is Rule 5 and this rule fires at Step 50 when the coordinator agent receives an event describing how to cover bandwidth on a link. Such an event is generated by the link agent in response to the message generated at Step 44 of Rule 4. When all the links of the VPC have responded Step 51 proceeds with the coordinator agent sending instructions to the links to perform the actions which had been reported at Step 51. This is shown at Steps 53 and 54. The rule ends at Step 52 if all the links do not respond. Once the links have been instructed in Steps 53 and 54 a success message (Step 55) is sent to the appropriate VPC bundle agent 30 and the rule ends at Step 56.

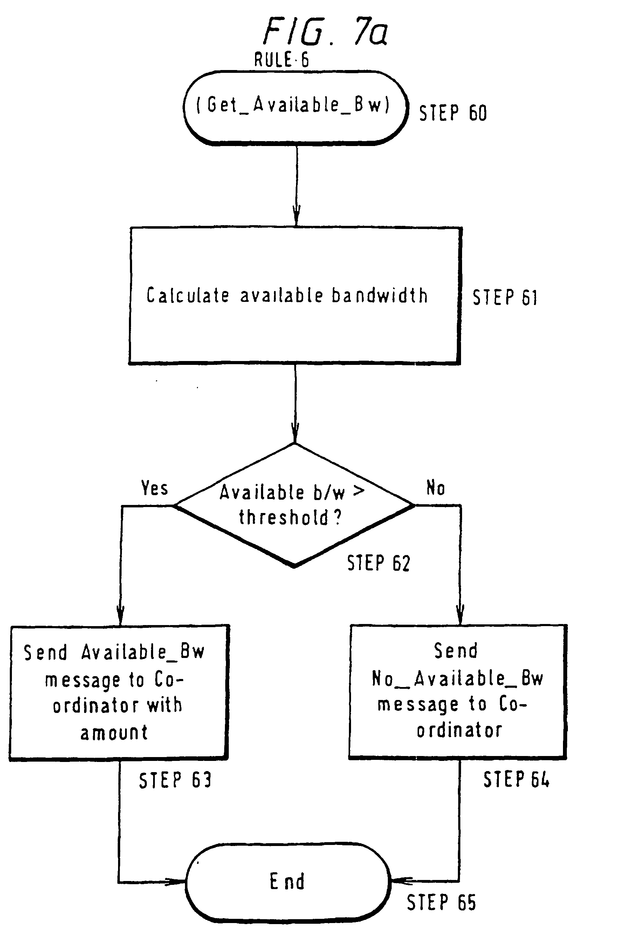

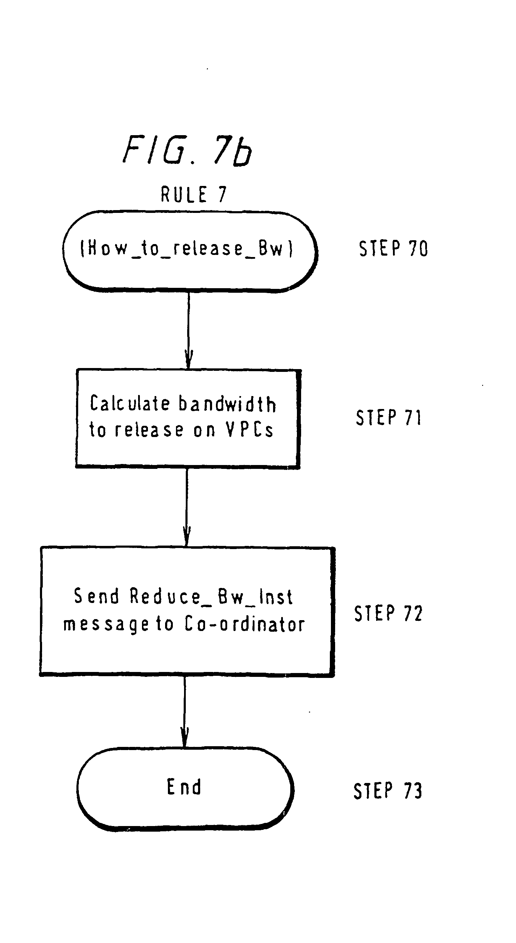

The last of the three agents is the link agent 31. The behaviour of this agent is described by the two rules 6 and 7 shown in Figure 7.

Rule 6 fires at Step 60 when the link agent receives a request for available bandwidth sent by a coordinator agent in accordance with Step 33 of Rule 3. At Step 61 the link agent calculates the available bandwidth at Step 62 it compares the available bandwidth with a preset threshold. If the answer is that more bandwidth is available, the link agent sends at Step 63 a message to this effect to the coordinator. This corresponds to the link agent fulfilling the requirement for Step 51 of Rule 5. If no more bandwidth is available the rule sends that message at Step 64 to the coordinator. The rule ends at Step 65.

The second rule covering the behaviour of a link agent 31 is Rule 7. This rule fires at Step 70 when the link agent receives a request to free up an amount of bandwidth, this request corresponding to Steps 53 and 54 of Rule 5. At Step 71 the link agent calculates the bandwidth to be released and at Step 72 sends to the appropriate coordinator agent 32 an instruction concerning the amount of bandwidth to be released. Rule 7 ends at Step 73.

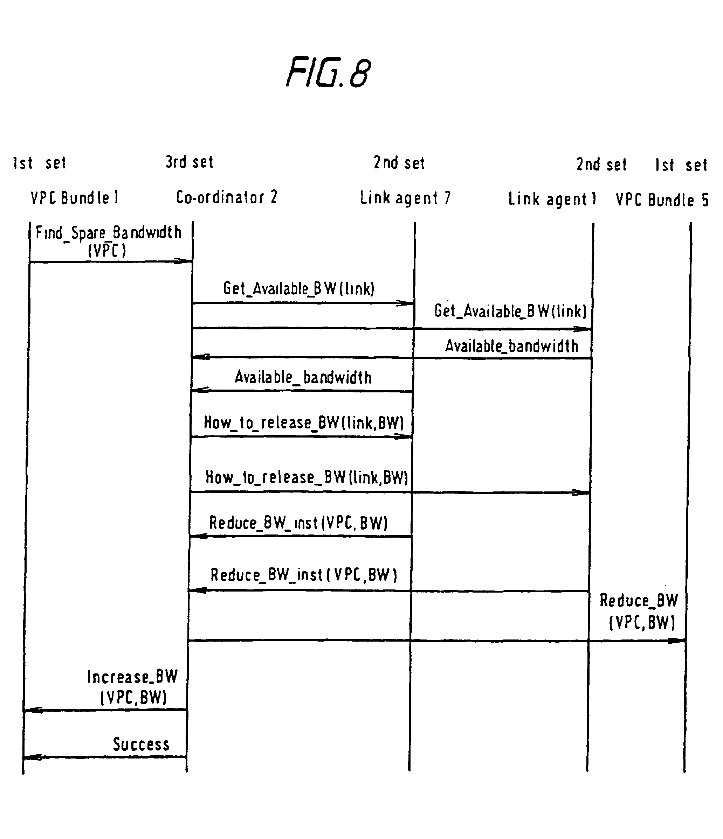

Figure 8 of the accompanying drawings is a diagram showing the temporal sequence and paths between the agents of messages sent during the tuning of bandwidths for a VPC.

There are ten basic messages which are used to carry out this tuning. These messages are:
(1) Find _Spare_Bandwidth(VPC_{problem}) - a request to the coordinator to find the spare bandwidth for *VPC*_{problem}
(2) Get_Available_BW(link) - get the available bandwidth on link.
(3) Available_bandwidth(b/w) - returns the bandwidth available on a link.
(4) How_to_release_BW(link,BWₘᵢₙ) - get instructions on how to release bandwidth, *BW*ₘᵢₙ, on link.
(5) Reduce_BW_inst(link,BW,instructions) - instructions on how to reduce the bandwidth by *BW* on link.
(6) Reduce_BW(VPC,BW) - instruct VPC bundle to reduce the bandwidth on *VPC* by *BW*.
(7) Increase_BW(VPC_{problem},BW) - instruct VPC bundle to increase the bandwidth of *VPC*_{problem} by *BW*.
(8) no_available_bandwidth - sent by link agent to inform coordinator that no bandwidth is available.
(9) Success - inform VPC bundle agent of successful resolution of problem.
(10) failure - inform VPC bundle agent of failure to resolve problem.

As will be appreciated from the foregoing the individual agents have no state and no learning capability.

In the management system which has just been described scaleability is achieved by adding agents as appropriate. Thus as a physical link is added to the network a link agent responsible for that link is added either to one of the computers in the management system or by the addition of a further computer. Similarly as the size of the network increases VPC bundle and coordinator agents can be added as appropriate using either computers already forming part of the management system or by adding further computers. It will also be appreciated that the computers may be either partly or totally replaced by purpose-built integrated circuits. This would of course cause a reduction in flexibility.

The ability to scale in this manner is based on the simple rule-based nature of the three sets of agents.

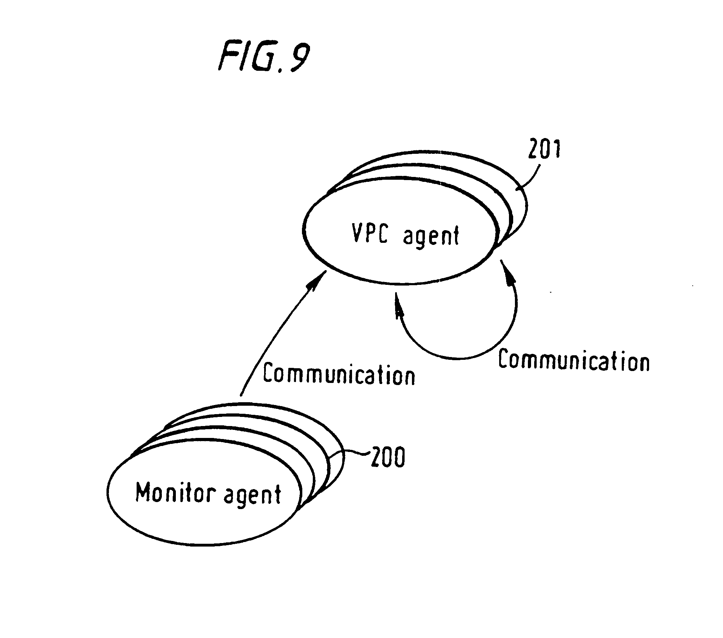

As already mentioned in the preamble of this specification, the system just described cannot deal with what has been defined as a VP Topology problem. A management system which is capable of working in parallel with the system of Figures 1 to 8 to solve VP Topology problems will now be described with reference to Figures 9 to 15.

As in the system of Figures 1 to 8 the VP Topology Problem Management System employs distributed agents. Also the physical connection and switches of the system are similar to those described with reference to Figures 2 and 3 so that the VP Topology Problem Management System resides in the plurality of programmable computers 7 shown in Figure 2. The VP Topology Problem Management System, as with the previously described system for controlling bandwidth allocation, utilises a distributed set of autonomous agents in the programmable computers 7. As in the previous embodiment the agents have been kept very simple by having no state and no learning capacity. In the present embodiment it utilises two agent types 200, 201 illustrated in Figure 9 of the accompanying drawings. The agent type indicated at 200 will hereinafter be referred to as a monitor agent and the agent type 201 will hereinafter be referred to as a VP agent.

The number of monitor agents will be in this embodiment the same as the number of links in the network and each monitor agent 200 is responsible for identifying a VP Topology problem and then notifying appropriate VP agents 201 to deal with the identified problem. Thus each monitor agent monitors its link and the VPs that use the link for the conditions that indicate a problem.

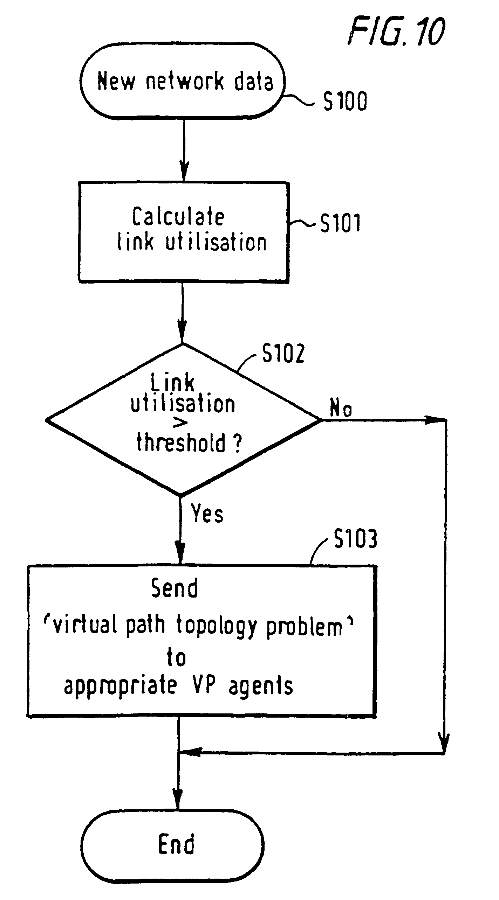

The behaviour of a monitor agent 100 is described by the rule shown in Figure 10.

Referring now to Figure 10, the rule governing the behaviour of a monitor agent 200 will be referred to as Rule 8 and fires at Step S100 when new data arrives from the link being monitored by the agent. At Step S101 the rule acts to calculate the utilisation levels of the link. This is done by calculating the sum of the bandwidth allocated to the VPs using the link. If this sum is equal to, or exceeds a predetermined threshold, then a VP Topology problem is identified. This is shown at Step S102. The actual process carried out by the monitor agent 201 at step S101 is as follows.

Call Acceptance Control (CAC) as shown at 24 in Figure 3 is responsible for accepting or rejecting a new connections onto the network depending on the capacity left in the network. Each connection type has an associated 'effective bandwidth' which is the amount of bandwidth the CAC allows for an actual connection of that type. When a new connection requests use of a VP, CAC subtracts the sum of the effective bandwidth's for active calls on the VP from the bandwidth that has been reserved for it on the links it traverses. Each VPC has a 'load factor' which says that the CAC should only accept calls up to a certain utilisation. If there is enough spare effective bandwidth, after taking any load factor into account, the connection is accepted.

As already described, each VP may carry a number of different connection types, with different effective bandwidths. The monitor agent threshold is set by calculating the effective bandwidth for each VP carried by a link above which the next connection request may be rejected. These bandwidths are summed to find the maximum effective bandwidth that could be allocated. A management policy will then decide a point below this to set as the threshold to trigger a Topology problem.

### Example

Link Capacity 155 Mbs
Carries two VPCs;

| | | |
|---|---|---|
| VPC1 | reserved bandwidth | 100Mbs |
| | load factor | 0.9 |
| | connection types | conn1 conn2 |

| | | |
|---|---|---|
| VPC2 | reserved bandwidth | 55Mbs |
| | load factor | 0.8 |
| | connection types | conn3 |

Conn1 effective bandwidths 5Mbs
Conn2 effective bandwidths 7Mbs
Conn3 effective bandwidth 3Mbs
Max effective bandwidth for VPC1
100*0.9 = 90Mbs available for connections
For simplicity the largest effective bandwidth which is 7Mbs is chosen
90/7 = 12.9, so 12 connections can be accepted.
The maximum effective bandwidth for VPC1 before the next request may be rejected (if Conn2) is
12*7 = 84Mbs
Similarly, for VPC2 the maximum effective bandwidth before the next request may be rejected is
42Mbs

The maximum effective bandwidth for the link is 42 + 84 = 126Mbs.

In the present embodiment management policy decides to trigger Topology Management when total effective bandwidth reaches 90% of this figure. So the actual threshold in this example is 126*0.9 = 113Mbs. Thus the threshold is based on the sum of the maximum bandwidths that may be allocated to the connections for each VP.

If a problem is present the monitor agent notifies at Step S103 each of the VP agents 201 which are associated with a VP which uses the problem link and the other VP agents concerned with the problem. As mentioned previously in the present specification each network resource is represented by a distributed object. Each object representing a link has a reference to the objects representing the VP's that it carries. In turn each of these objects has a reference to the VP agents that have an interest in them. Each VP agent 201 represents a VP for a particular Quality of Service (QoS). When it is informed of a VP Topology problem it works with any other VP agents that have been notified of this problem to try and make capacity available on the problem link.

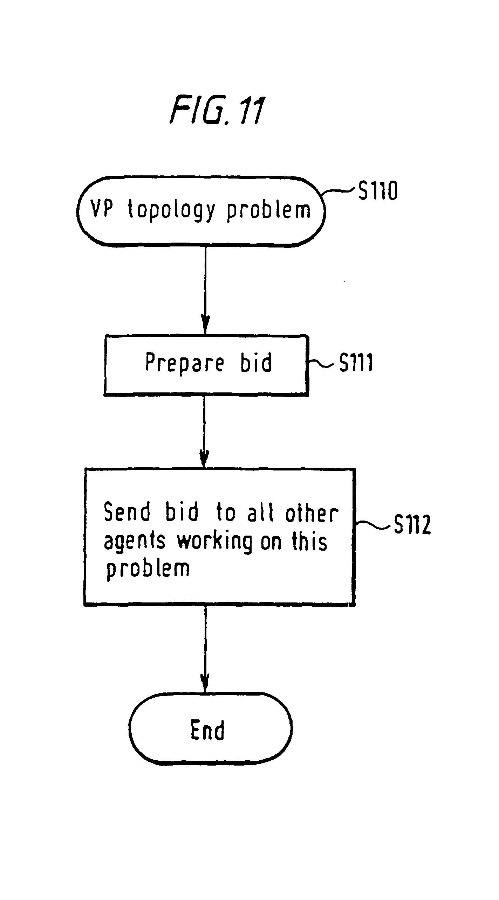

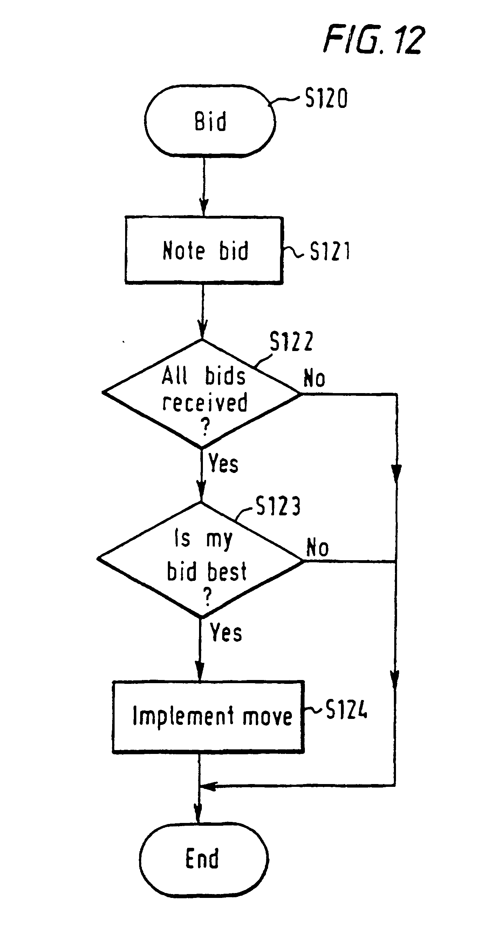

The behaviour of each VP agent 201 is described by the rules illustrated in Figures 11 and 12. Thus Figure 11 illustrates a Rule 9 which is triggered when a VP agent 201 receives a VP Topology problem message in response to a signal from a monitor agent 200 sent in response to a "YES" output at Step 203 in previously described Rule 8. Thus Rule 8 is triggered at Step S110 when the VP agent 201 receives a notification that a VP Topology problem is present. At Step S111 Rule 8 carries out a series of functions which can be categorised as "preparing a bid". The agent prepares the bid by searching for a new route through the network that avoids the problem link and has appropriate spare capacity in all the links it will traverse. The bid is a numerical score based on the bandwidth that will be moved and the amount of spare capacity along the new route. If no route can be found a score guaranteed never to win will be produced. At Step S112 the VP agent sends its bid to all the other VP agents which were notified by the monitor agent 200 that a VP Topology problem existed.

Figure 12 illustrates Rule 10. This rule is triggered at Step S120 when a bid is received from another agent. At Step S121 the bid is recorded along with any other bid which has been generated by any other VP agent involved in the problem and which had been notified by the monitor agent 200 of the problem. When all bids have been received and recorded the VP agent can determine if its bid is best. This is illustrated at Step S122. If all the bids have been received the rule proceeds to Step S123 where the agent determines if its bid is the best. If its bid is not the best it again takes no further action. If the VP agents own bid is the best it then implements a set of actions to create a bypass for the link which caused the initial problem.

This is done at Step S124 and comprises the steps of:
a) Creating a set of virtual links to support the new virtual path connection.
b) Creating the new virtual path connection over the virtual path links.
c) Modifying routing tables 21 which form part of the ATM switch described with reference to Figure 3 of the drawings.
d) Watching for all existing connections on the old VPC to complete.
e) Removing the old VPC.

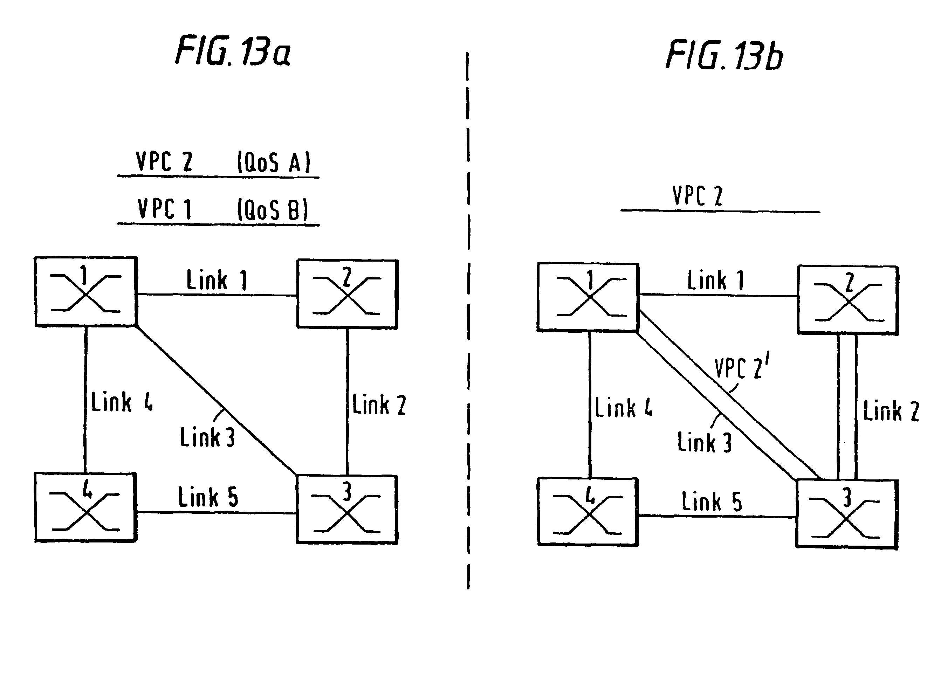

The results of these operations are illustrated in Figures 13A and 13B in which Figure 13A shows a network configuration when a VP Topology problem has arisen and Figure 13B shows the results of the activity of the already described Monitor and VP agents. The network shown in Figures 13A and 13B is similar to that shown in Figure 2. It will be seen that the links which had been generally indicated at 5 in Figure 2 are now individually numbered 5(1), 5(2), 5(3), 5(4) and 5(5).

As shown in Figure 13A link 5(1) consists of 2 VPCs, VPC1 and VPC2.

In Figure 13A the following conditions exist in the network when data is first read:
VPC1 is using all its reserved bandwidth.
VPC2 requires more than its allocated bandwidth.
LINK 1 has had all its capacity allocated to VPC1 and VPC2.
LINK 2 and LINK 3 have spare capacity.

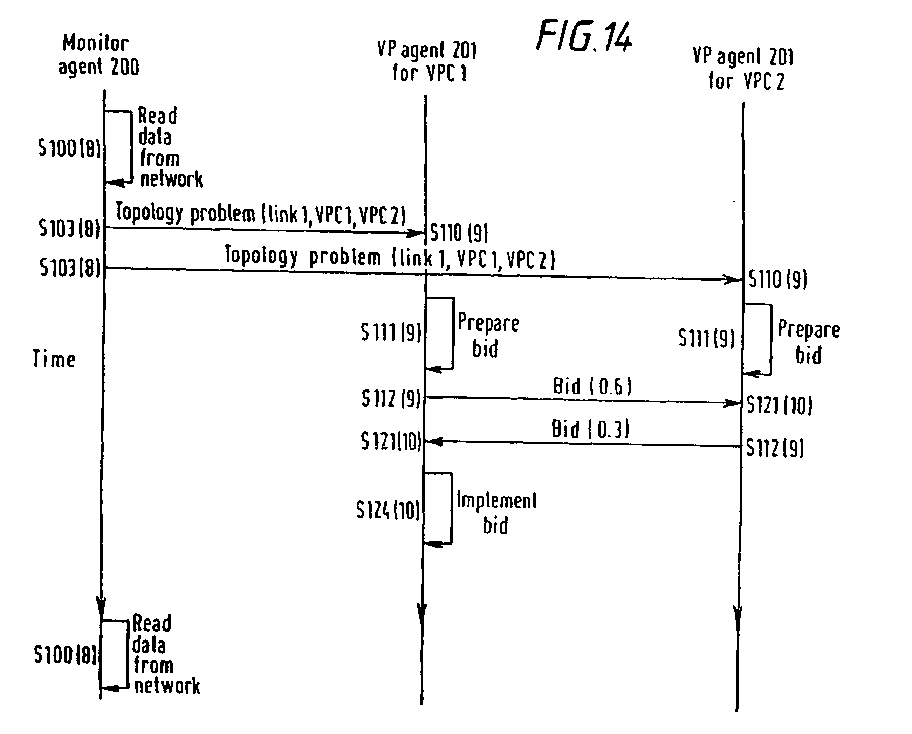

It is assumed in this figure that there is one VPC Bundle agent 30 that handles all the VPCs for Bandwidth Tuning. The Bandwidth management system tries to increase the bandwidth of VPC2 but fails because there is no spare capacity. The Topology management system identifies the problem and replaces VPC1 with VPC1' that uses LINK 3 and LINK 2 as has been already described with regard to Figures 13a, 13b and 14.

Figure 14 shows the temporal sequence of messages between the monitor agent (200) which monitors link 5(1) of Figure 13A and the two VP agents (201) responsible for VPC1 and VPC2 respectively.

In the diagram of Figure 14 the relationship between the Rules 8, 9 and 10 and the monitor and VP agents is shown by using the step numbers together with the number of the relevant rule as combined numbers. As with Figure 8 the passage of time is indicated in the downwards direction.

Thus the first action in Figure 14 is the monitor agent reading data from the link 5(1) in accordance with Step S100 of Rule 8. Next in accordance with Step S101 of Rule 8 the existence of a VP Topology problem is notified to the respective VP agents representing VPC1 and VPC2 respectively. In practice these two notifications would be virtually simultaneous. On receipt of the notification of a problem the two VP agents carry out the steps of Rule 9 and in particular send out respective bids at S112(9) to each other. In the illustration of Figure 14 the bid of the VP agent for VPC1 wins and as a result the winning bid is implemented at S124(10).

The result of the implementation is shown in Figure 13B. VPC1 has been deleted and replaced by VPC1' the physical path of which passes via ATM switch 3 but as was explained with regard to VPC 56 of Figure 2 cannot terminate at switch 3. Once the new VPC (VPC1') has been created (as shown in 13B) data about it will start to arrive from the network. Similarly when the old VPC (VPC1) has been deleted data about it will no longer arrive from the network. It will be apparent that the Topology Management System just described is capable of operating independently of the bandwidth management system described with respect to Figures 1 to 8 and that the converse is also applicable. However it is preferred for the two systems to operate in parallel. In this embodiment the agents described will all reside in the general purpose computers 7 of Figure 2. It is thus essential that the agents shown in Figure 4 are capable of taking the changes caused by the Topology Management System into account.

The division of the Topology Management system into monitor and VP agents makes the system more robust since the failure of a VP agent will only means that it is not involved in problem solution. VP agent failure is detected by having a time period in which all bids must be received. If VP agent's bid is not received in this time period then it is excluded from the problem but the problem can still be solved by the other VP agents. If there were a controller agents that received these bids to make the decision and this controller agent failed then the problem could not be solved.

Thus whilst the Topology Management system could incorporate central controller but the more distributed control mechanism just described provides greater security in generation for the reasons just given.

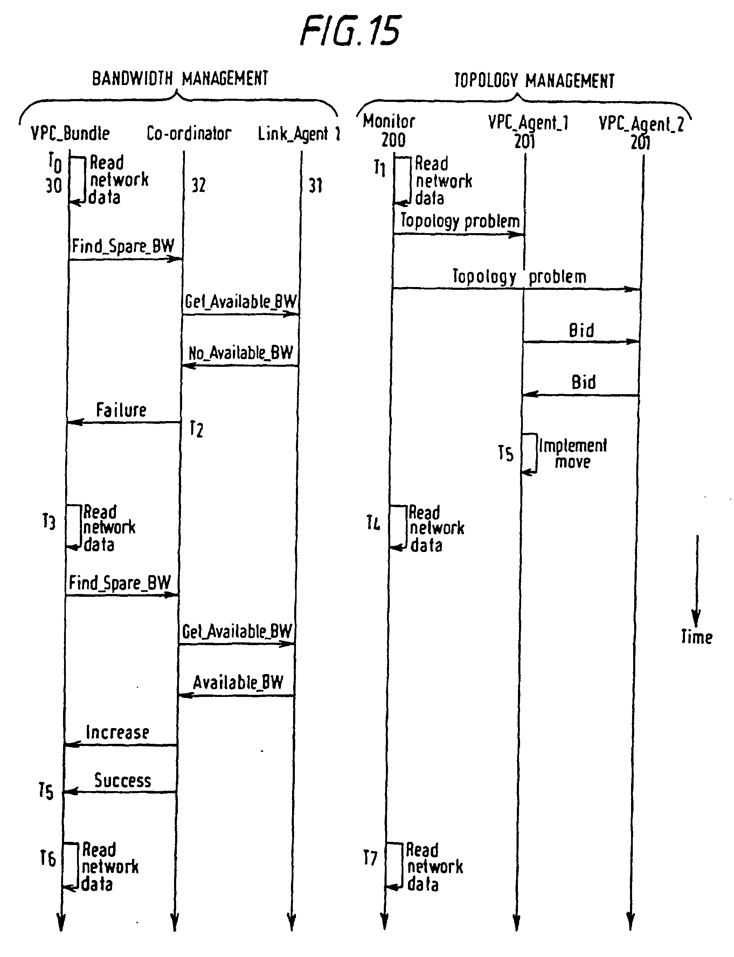

Figure 15 of the accompanying drawings is an illustration of the parallel working of the bandwidth of Topology Management Systems and is effectively a combination of Figure 8 and of Figure 14 with the bandwidth management system slightly simplified in that only a single link agent 31 is shown.

In the temporal sequence the bandwidth management system reads the network data at T₀ and the Topology Management System reads the network data at T₁. Bandwidth management fails at T₂; Topology Management alters the network at T₃ by replacing VPC1 by VPC1'; Bandwidth management reads the new network data at T₄ with successful tuning indicated at T₅. Further readings by both management sub-systems at T₆ and T₇ indicate no further problems.

It will also be apparent that the two management systems can operate over different timescales and that there is no need for there to be a specific integration of these timescales. Thus the two systems can operate entirely independently provided that changes in the network configuration are recognised by the two systems.

## Claims

1. A management system for an Asynchronous Transfer Mode, ATM, virtual path network in which the physical connections are provided by broadband links (5, Link 1, Link 2, Link 3, Link 4, Link 5) between ATM switches (1, 2, 3, 4), and comprising electronic data processing means (7) connectable to individual ATM switches (1, 2, 3, 4) in an ATM virtual path network, and operable, when in use, to measure current network load in individual links (5) and virtual paths (50-56, VPC1, VPC2) of the network, **characterised by** the electronic data processing means (7) further including sets of inter-communicating distributed software agents (30, 31, 32, 200, 201) for carrying out management of the network in response to measured load and management requirements, and in that at least some of the agents (30, 201) are each associated with a respective one, or a sub-set, of the virtual paths (50-56, VPC1, VPC2) of the network.

2. A system according to claim 1, wherein once the initial parameters have been set the system operates entirely in response to measured load and management requirements.

3. A system according to claim 1 or 2, wherein the distributed agents (30, 31, 32, 200, 201) have no state and no learning capability.

4. A system according to any preceding claim, wherein the agents (30, 31, 32, 200, 201) include three sets of distributed agents (30, 31, 32) for carrying out bandwidth management of the system, the first set comprising agents (30) each of which is associated with a respective one, or a sub-set, of the virtual paths (50-56) of the network, a second set of agents (31) responsible for physical links (5), and a third set of agents (32) for handling performance events.

5. A management system according to claim 4, wherein each agent (30) of said first set is associated with a plurality of virtual paths (50-56) and is adapted to respond to a lack of bandwidth in one of its associated virtual paths (50-56) to generate a request to an agent (32) of said third set to obtain bandwidth.

6. A management system according to claim 5, wherein each one of the agents (32) of the third set of agents is adapted, in response to a request from an agent (30) of the first set of agents, to request information regarding the availability of bandwidth on one or more physical links (5) from one or more of the agents (31) of the second set of agents, the or each agent (31) from the second set of agents responding to a request from an agent (32) of the third set of agents by sending to the requesting agent (32) information specifying the available bandwidth on its associated link (5).

7. A management system according to claim 6, wherein, in response to bandwidth information received from the or each agent (31) of said second set of agents, the or each agent (32) of the third set of agents is adapted to instruct the or each appropriate agent (31) of the second set of agents as to how bandwidth is to be released.

8. A management system according to claim 7, wherein the or each agent (31) of said second set of agents so instructed by one (32) of said third set of agents is adapted to calculate the bandwidth to be released in response to the request and to send to the third set agent (32) an instruction concerning the amount of bandwidth to be released and the identity or identities of the virtual path or paths (50-56) from which the bandwidth should be released.

9. A management system according to claim 8, wherein in response to the instructions received from the or each second set agent (31), the third set agent (32) is adapted to instruct the first set agent (30) which made the central request to increase bandwidth to meet its requirements, and to instruct the or each first set agent (30), identified by the or each second set agent (31) which carried out the bandwidth calculations, to reduce its bandwidth to meet the requirements of the centrally requesting first set agent (30).

10. A management system according to any one of the preceding claims further comprising monitoring means (200) for determining if a bandwidth problem exists over a link or links (Link 1, Link 2, Link 3, Link 4, Link 5) of the network and for notifying one or more of a plurality of virtual path agents (201) each of which is associated with a respective one, or a sub-set, of the virtual paths (VPC1, VPC2) of the network, wherein the virtual path agents (201) are further adapted to identify a new route (VPC1') through the network that both avoids the problem link (Link 1) and has spare capacity, and wherein the system further comprises means (201) for selecting the route identified (VPC1') and creating a new virtual path connection (VPC1') over a link or a number of links (Link 2, Link 3) of the network.

11. A system according to claim 10, wherein said monitoring means (200) is adapted to calculate the sum of the bandwidths allocated to virtual path connections (VPC1, VPC2) which are using the link (Link 1), to compare the sum with a predetermined threshold, and to notify the or each virtual path agent (201) associated with the virtual paths (VPC1, VPC2) of the link (Link 1) that a problem exists.

12. A system according to claim 11, wherein said monitoring means (200) comprises a plurality of distributed monitoring agents (200), there being a monitor agent (200) for each link (Link 1, Link 2, Link 3, Link 4, Link 5).

13. A system according to any of claims 10 to 12, wherein each virtual path agent (201) is adapted to generate, on receipt of notification of a problem by said monitoring means (200), a bid based on the bandwidths to be moved and the amount of spare capacity along the new route (VPC1') after the virtual path agent (201) has identified a route, whereby one of the virtual path agents (201) may select a new route (VPC1') in response to the best bid generated.

14. A system according to claim 13, wherein each virtual path agent (201) is adapted to send a bid to each virtual path agent (201) notified by said monitoring means (200), to determine if its own generated bid is the best bid out of all of those generated by all of the virtual path agents notified by said monitoring means (200) and, if the determination is positive, to implement a set of actions to create a bypass for the link (Link 1) which caused the initial problem.

15. A method of managing an Asynchronous Transfer Mode, ATM, virtual path network in which the physical connections are provided by broadband links (5, Link 1, Link 2, Link 3, Link 4, Link 5) between ATM switches (1, 2, 3, 4), and comprising electronic data processing means (7) connectable to individual ATM switches (1, 2, 3, 4) in an ATM virtual path network, the method comprising using the electronic data processing means to measure current network load in individual links (5) and virtual paths (50-56, VPC1, VPC2) of the network, **characterised by** utilising sets of inter-communicating distributed software agents (30, 31, 32, 200, 201), running on the electronic data processing means (7), to carry out management of the network in response to the measured load and to management requirements, and in that at least some of the agents (30, 201) are each associated with a respective one, or a sub-set, of the virtual paths (50-56, VPC1, VPC2) of the network.

16. A method according to claim 15, wherein once the initial parameters have been set the management of the network operates entirely in response to measured load and management requirements.

17. A method according to claim 15 or claim 16, wherein the distributed agents have no state and no learning capability.

18. A method according to any one of claims 15 to 17, wherein the agents (30, 31, 32, 200, 201) include three sets of distributed agents (30, 31, 32) for carrying out bandwidth management of the system, the first set comprising agents (30) each of which is associated with a respective one, or a sub-set, of the virtual paths (50-56) of the network, a second set of agents (31) responsible for physical links (5), and a third set of agents (32) for handling performance events.

19. A method according to claim 18, wherein each agent (30) of said first set is associated with a plurality of virtual paths (50-56) and responds to a lack of bandwidth in one of its associated virtual paths (50-56) by generating a request to an agent (32) of said third set to obtain bandwidth.

20. A method according to claim 19, wherein each one of the agents (32) of the third set of agents, in response to a request from an agent (30) of the first set of agents, requests information regarding the availability of bandwidth on one or more physical links (5) from one or more of the agents (31) of the second set of agents, and wherein the or each agent (31) from the second set of agents responds to a request from an agent (32) of the third set of agents by sending to the requesting agent (32) information specifying the available bandwidth on its associated link (5).

21. A method according to claim 20, wherein, in response to bandwidth information received from the or each agent (31) of said second set of agents, the or each agent (32) of the third set of agents instructs the or each appropriate agent (31) of the second set of agents as to how bandwidth is to be released.

22. A method according to claim 21, wherein the or each agent (31) of said second set of agents so instructed by one (32) of said third set of agents calculates the bandwidth to be released in response to the request and sends to the third set agent (32) an instruction concerning the amount of bandwidth to be released and the identity or identities of the virtual path or paths (50-56) from which the bandwidth should be released.

23. A method according to claim 22, wherein in response to the instructions received from the or each second set agent (31), the third set agent (32) instructs the first set agent (30) which made the central request to increase bandwidth to meet its requirements, and instructs the or each first set agent (30), identified by the or each second set agent (31) which carried out the bandwidth calculations, to reduce its bandwidth to meet the requirements of the centrally requesting first set agent (30).

24. A method according to any one of claims 15 to 23, further comprising determining if a bandwidth problem exists over a link or links (Link 1, Link 2, Link 3, Link 4, Link 5) of the network and notifying one or more of a plurality of virtual path agents (201) each of which is associated with a respective one, or a sub-set, of the virtual paths (VPC1, VPC2) of the network, and wherein each thus notified virtual path agent (201) attempts to identify a new route (VPC1') through the network that both avoids the problem link (Link 1) and has spare capacity, and wherein the method further comprises selecting the route identified (VPC1') and creating a new virtual path connection (VPC1') over a link or a number of links (Link 2, Link 3) of the network.

25. A method according to claim 24, wherein said monitoring is carried out by a plurality of distributed monitor agents (200), each of which is associated with a respective one or a subset of the links (Link 1, Link 2, Link 3, Link 4, Link 5), which monitor agents (201) calculate the sum of the bandwidth allocated to the actual virtual paths (VPC1, VPC2) which constitute the or each link (Link 1), compare the sum with a predetermined threshold, and, if the comparison indicates there is a problem, notify the respective virtual path agents (201) that a problem exists.

26. A method according to claim 24 or claim 25, wherein each virtual path agent (201), on receipt of a notification of a problem by a monitor agent (200), generates a bid based on the bandwidth to be moved and the amount of spare capacity along the new route (VPC1'), after the virtual path agent has identified a route, whereby one of the virtual path agents (201) may select a new route (VPC1') in response to the best bid generated.

27. A method according to claim 26 wherein each virtual path agent (201) sends a bid to each virtual path agent (201) notified by said monitoring means (200), determines if its own generated bid is the best bid out of all of those generated by all of the virtual path agents (201) notified by said monitoring means (200) and, if the determination is positive, implements a set of actions to create a bypass for the link (Link 1) which caused the initial problem.

## Patentansprüche

1. Verwaltungssystem für ein Netzwerk mit virtuellen Pfaden mit asynchronem Übertragungsmodus, ATM (Asynchronous Transfer Mode), bei dem die Verbindungen über Breitbandübertragungswege (5, Übertragungsweg 1, Übertragungsweg 2, Übertragungsweg 3, Übertragungsweg 4, Übertragungsweg 5) zwischen ATM-Vermittlungsstellen (1, 2, 3, 4) bereitgestellt werden, und das elektronische Datenverarbeitungseinrichtungen (7) umfasst, die mit einzelnen ATM-Vermittlungsstellen (1, 2, 3, 4) in einem ATM-Netzwerk mit virtuellen Pfaden verbunden werden können, die bei der Verwendung betrieben werden können, um die aktuelle Netzwerklast auf einzelnen Übertragungswegen (1) und virtuellen Pfaden (50-56, VPC1, VPC2) des Netzwerks zu messen, **dadurch gekennzeichnet, dass** die elektronischen Datenverarbeitungseinrichtungen weiter Sätze von miteinander kommunizierenden Softwareagenten (30, 31, 32, 200, 201) enthalten, um die Verwaltung des Netzwerks als Reaktion auf gemessene Last und Verwaltungserfordernisse durchzuführen, und **dadurch**, dass wenigstens einige der Agenten (30, 201) jeweils einem entsprechenden oder einer Untermenge der virtuellen Pfade (50-56, VPC1, VPC2) des Netzwerks zugeordnet sind.

2. System nach Anspruch 1, bei dem, wenn die Anfangsparameter in dem System einmal eingestellt worden sind, das System vollständig in Reaktion auf gemessene Last und Verwaltungserfordernisse arbeitet.

3. System nach Anspruch 1 oder 2, bei dem die verteilten Agenten (30, 31, 32, 200, 201) keinen Zustand und keine Lernfähigkeit haben.

4. System nach einem der vorangehenden Ansprüche, bei dem die Agenten (30, 31, 32, 200, 201) drei Sätze von verteilten Agenten (30, 31, 32) zur Durchführung der Bandbreitenverwaltung des Systems umfassen, wobei der erste Satz Agenten (30) umfasst, von denen jeder einem jeweiligen oder einer Untermenge der virtuellen Pfade (50-56) des Netzwerks zugeordnet ist, ein zweiter Satz von Agenten (31) für physikalische Verbindungen (5) und ein dritter Satz von Agenten (32) für die Bearbeitung von Ereignissen bezüglich der Leistungsfähigkeit verantwortlich ist.

5. Verwaltungssystem nach Anspruch 4, in dem jeder Agent (30) des ersten Satzes mehreren virtuellen Pfaden (50-56) zugeordnet ist, und dazu eingerichtet ist, auf einen Mangel an Bandbreite in einem seiner zugeordneten virtuellen Pfade (50-56) zu reagieren, indem er eine Anforderung an einen Agenten (32) des dritten Satzes erzeugt, um Bandbreite zu erhalten.

6. Verwaltungssystem nach Anspruch 5, in dem jeder der Agenten (32) des dritten Satzes von Agenten dazu eingerichtet ist, als Reaktion auf eine Anforderung von einem Agenten (30) aus dem ersten Satz von Agenten Informationen bezüglich der Verfügbarkeit von Bandbreite auf einem oder mehreren physikalischen Übertragungswegen (5) bei einem oder mehreren Agenten (31) aus dem zweiten Satz von Agenten anzufragen, und in dem der oder jeder Agent (31) aus dem zweiten Satz von Agenten auf eine Anfrage von einem Agenten (32) aus dem dritten Satz von Agenten reagiert, indem er Informationen an den anfragenden Agenten (32) sendet, die die verfügbare Bandbreite auf seinem zugeordneten Übertragungsweg (5) angeben.

7. Verwaltungssystem nach Anspruch 6, in dem als Reaktion auf Bandbreiteninformationen, die von dem oder jedem Agent (31) aus dem zweiten Satz von Agenten empfangen wurden, der oder jeder Agent (32) aus dem dritten Satz von Agenten dazu eingerichtet ist, den oder jeden geeigneten Agenten (31) aus dem zweiten Satz von Agenten anzuweisen, auf welche Weise Bandbreite freigegeben werden soll.

8. Verwaltungssystem nach Anspruch 7, in dem der oder jeder Agent (31) aus dem zweiten Satz von Agenten, der auf diese Weise durch einen (32) aus dem dritten Satz von Agenten angewiesen wurde, dazu eingerichtet ist, die Bandbreite zu berechnen, die als Reaktion auf die Anforderung freigegeben werden soll, und dem Agenten (32) aus dem dritten Satz eine Anweisung zu senden, die den Umfang der Bandbreite, die freigegeben werden soll, und die Identität oder die Identitäten des virtuellen Pfades oder der Pfade (50-56) betrifft, von denen die Bandbreite freigegeben werden soll.

9. Verwaltungssystem nach Anspruch 8, in dem als Reaktion auf die Anweisungen, die von dem oder jedem Agenten (31) aus dem zweiten Satz empfangen wurden, der Agent (32) aus dem dritten Satz dazu eingerichtet ist, den Agenten (30) aus dem ersten Satz, der die zentrale Anforderung gemacht hat, anzuweisen, die Bandbreite zu erhöhen, um seinen Erfordernissen zu genügen, und den oder jeden Agenten (30) aus dem ersten Satz, der von dem oder jedem Agenten (31) aus dem zweiten Satz identifiziert wird, der die Bandbreitenberechnung durchgeführt hat, anzuweisen, seine Bandbreite zu verringern, um den Erfordernissen des zentral anfordernden Agenten (30) aus dem ersten Satz zu genügen.

10. Verwaltungssystem nach einem der vorangehenden Ansprüche, das weiter Überwachungseinrichtungen (200) enthält, die bestimmen, ob ein Bandbreitenproblem über einen Übertragungsweg oder Übertragungswege (Übertragungsweg 1, Übertragungsweg 2, Übertragungsweg 3, Übertragungsweg 4, Übertragungsweg 5) des Netzwerks besteht, und die einen oder mehrere von mehreren Agenten von virtuellen Pfaden (201) benachrichtigen, von denen jeder einem jeweiligen oder einer Untermenge von virtuellen Pfaden (VPC1, VPC2) des Netzwerks zugeordnet ist, wobei die Agenten der virtuellen Pfade (201) weiter dazu eingerichtet sind, einen neuen Leitweg (VPC1') durch das Netzwerk zu identifizieren, der sowohl den problematischen Übertragungsweg (Übertragungsweg 1) vermeidet, als auch Ersatzkapazität hat, wobei das System weiter Einrichtungen (201) umfasst, die den identifizierten Leitweg (VPC1') auswählen und eine neue Verbindung über einen virtuellen Pfad (VPC1') über einen Übertragungsweg oder eine Anzahl von Übertragungswegen (Übertragungsweg 2, Übertragungsweg 3) des Netzwerks erzeugen.

11. System nach Anspruch 10, in dem die Überwachungseinrichtung (200) dazu eingerichtet ist, die Summe der Bandbreiten zu berechnen, die den Verbindungen über virtuelle Pfade (VPC1, VPC2) zugewiesen sind, die den Übertragungsweg (Übertragungsweg 1) verwenden, um die Summe mit einer vorher festgelegten Schwelle zu vergleichen, und den oder jeden Agenten des virtuellen Pfades (201), der den virtuellen Pfaden (VPC1, VPC2) des Übertragungsweges (Übertragungsweg 1) zugeordnet ist, zu benachrichtigen, dass ein Problem besteht.

12. System nach Anspruch 11, in dem die Überwachungseinrichtung (200) mehrere verteilte Überwachungsagenten (200) umfasst, wobei es einen Überwachungsagenten (200) für jeden Übertragungsweg (Übertragungsweg 1, Übertragungsweg 2, Übertragungsweg 3, Übertragungsweg 4, Übertragungsweg 5) gibt.

13. System nach einem der Ansprüche 10 bis 12, in dem jeder Agent eines virtuellen Pfades (201) dazu eingerichtet ist, bei Empfang einer Benachrichtigung über ein Problem durch die Überwachungseinrichtung (200) ein Angebot auf Basis der Bandbreiten, die verlagert werden sollen, und des Umfangs der Ersatzkapazität entlang des neuen Leitwegs (VPC1') zu erzeugen, nachdem der Agent des virtuellen Pfades (201) einen Leitweg identifiziert hat, wodurch einer der Agenten eines virtuellen Pfades (201) einen neuen Leitweg (VPC1') als Reaktion auf das beste erzeugte Angebot auswählen kann.

14. System nach Anspruch 13, in dem jeder Agent eines virtuellen Pfades (201) dazu eingerichtet ist, ein Angebot an jeden Agenten eines virtuellen Pfades (201) zu senden, der von der Überwachungseinrichtung (200) benachrichtigt wurde, festzustellen, ob sein eigenes erzeugtes Angebot das beste Angebot unter allen Angeboten ist, die von allen Agenten von virtuellen Pfaden erzeugt wurden, die von der Überwachungseinrichtung (200) benachrichtigt wurden, und wenn die Feststellung positiv ist, einen Satz von Aktionen zu einzusetzen, um eine Umgehung für den Übertragungsweg (Übertragungsweg 1) zu erzeugen, der das anfängliche Problem verursacht hat.

15. Verfahren zur Verwaltung eines Netzwerks mit virtuellen Pfaden mit asynchronem Übertragungsmodus (ATM), in dem die physikalischen Verbindungen durch Breitbandübertragungswege (5, Übertragungsweg 1, Übertragungsweg 2, Übertragungsweg 3, Übertragungsweg 4, Übertragungsweg 5) zwischen ATM-Vermittlungsstellen (1, 2, 3, 4) bereitgestellt werden, und das elektronische Datenverarbeitungseinrichtungen (7) umfasst, die mit individuellen ATM-Vermittlungsstellen (1, 2, 3, 4) in einem ATM-Netzwerk mit virtuellen Pfaden verbunden werden können, wobei das Verfahren die Verwendung der elektronischen Datenverarbeitungseinrichtungen zur Messung der aktuellen Netzwerklast auf einzelnen Übertragungsweg en(5) und virtuellen Pfaden (50-56, VPC1, VPC2) des Netzwerks umfasst, **gekennzeichnet durch** die Nutzung von Sätzen von miteinander kommunizierenden verteilten Softwareagenten (30, 31, 32, 200, 201), die auf den elektronischen Datenverarbeitungseinrichtungen (7) laufen, um die Verwaltung des Netzwerks als Reaktion auf gemessene Last und Verwaltungserfordernisse durchzuführen, und **dadurch**, dass wenigstens einige der Agenten (30, 201) jeweils einem entsprechenden oder einer Untermenge der virtuellen Pfade (50-56, VPC1, VPC2) des Netzwerks zugeordnet sind.

16. Verfahren nach Anspruch 15, bei dem, wenn die Anfangsparameter einmal eingestellt worden sind, die Vewaltung des Netzwerks vollständig in Reaktion auf gemessene Last und Verwaltungserfordernisse arbeitet.

17. Verfahren nach Anspruch 15 oder 16, bei dem die verteilten Agenten (30, 31, 32, 200, 201) keinen Zustand und keine Lernfähigkeit haben.

18. Verfahren nach einem der Ansprüche 15 bis 17, bei dem die Agenten (30, 31, 32, 200, 201) drei Sätze von verteilten Agenten (30, 31, 32) zur Durchführung der Bandbreitenverwaltung des Systems umfassen, wobei der erste Satz Agenten (30) umfasst, von denen jeder einem jeweiligen oder einer Untermenge der virtuellen Pfade (50-56) des Netzwerks zugeordnet ist, ein zweiter Satz von Agenten (30) für physikalische Verbindungen (5) und ein dritter Satz von Agenten (32) für die Bearbeitung von Ereignissen bezüglich der Leistungsfähigkeit verantwortlich ist.

19. Verfahren nach Anspruch 18, in dem jeder Agent (30) des ersten Satzes mehreren virtuellen Pfaden (50-56) zugeordnet ist, und auf einen Mangel an Bandbreite in einem seiner zugeordneten virtuellen Pfade (50-56) reagiert, indem er eine Anforderung an einen Agenten (32) des dritten Satzes erzeugt, um Bandbreite zu erhalten.

20. Verfahren nach Anspruch 19, in dem jeder der Agenten (32) des dritten Satzes von Agenten als Reaktion auf eine Anforderung von einem Agenten (30) aus dem ersten Satz von Agenten Informationen bezüglich der Verfügbarkeit von Bandbreite auf einem oder mehreren physikalischen Übertragungswegen(5) von einem oder mehreren Agenten (31) aus dem zweiten Satz von Agenten anfragt, und in dem der oder jeder Agent (31) aus dem zweiten Satz von Agenten auf eine Anforderung von einem Agenten (32) aus dem dritten Satz von Agenten reagiert, indem er Informationen an den anfragenden Agenten (32) sendet, die die verfügbare Bandbreite auf seinem zugeordneten Übertragungsweg (5) angeben.

21. Verfahren nach Anspruch 20, in dem als Reaktion auf Bandbreiteninformationen, die von dem oder jedem Agent (31) aus dem zweiten Satz von Agenten empfangen wurden, der oder jeder Agent (32) aus dem dritten Satz von Agenten den oder jeden geeigneten Agenten (31) aus dem zweiten Satz von Agenten anweist, auf welche Weise Bandbreite freigegeben werden soll.

22. Verfahren nach Anspruch 21, in dem der oder jeder Agent (31) aus dem zweiten Satz von Agenten, der auf diese Weise durch einen (32) aus dem dritten Satz von Agenten angewiesen wurde, die Bandbreite berechnet, die als Reaktion auf die Anforderung freigegeben werden soll, und dem dritten Agenten (32) eine Anweisung sendet, die den Umfang der Bandbreite, die freigegeben werden soll, und die Identität oder die Identitäten des virtuellen Pfades oder der Pfade (50-56) betrifft, von denen die Bandbreite freigegeben werden soll.

23. Verfahren nach Anspruch 22, in dem als Reaktion auf die Anweisungen, die von dem oder jedem Agenten (31) aus dem zweiten Satz empfangen wurden, der Agent (32) aus dem dritten Satz den Agenten (30) aus dem ersten Satz, der die zentrale Anforderung gemacht hat, anweist, die Bandbreite zu erhöhen, um seinen Erfordernissen zu genügen, und den oder jeden Agenten (30) aus dem ersten Satz, der von dem oder jedem Agenten (31) aus dem zweiten Satz identifiziert wird, der die Bandbreitenberechnung durchgeführt hat, anweist, seine Bandbreite zu verringern, um den Erfordernissen des zentral anfordernden Agenten (30) aus dem ersten Satz zu genügen,

24. Verfahren nach einem der Ansprüche 15 bis 23, das weiter die Feststellung , ob ein Bandbreitenproblem über einen Übertragungsweg oder Übertragungswege (Übertragungsweg 1, Übertragungsweg 2, Übertragungsweg 3, Übertragungsweg 4, Übertragungsweg 5) des Netzwerks besteht, und die Benachrichtigung eines oder mehreren von mehreren Agenten von virtuellen Pfaden (201) enthält, von denen jeder einem jeweiligen oder einer Untermenge von virtuellen Pfaden (VPC1, VPC2) des Netzwerks zugeordnet ist, und bei dem jeder auf diese Weise benachrichtigte Agent eines virtuellen Pfades (201) versucht, einen neuen Leitweg (VPC1') durch das Netzwerk zu identifizieren, der sowohl den problematischen Übertragungsweg (Übertragungsweg 1) vermeidet, als auch Ersatzkapazität hat, und wobei das Verfahren weiter die Auswahl des identifizierten Leitwegs (VCP1') und die Erzeugung einer neuen Verbindung über einen virtuellen Pfad (VPC1') über einen Übertragungsweg oder eine Anzahl von Übertragungswegen (Übertragungsweg 2, Übertragungsweg 3) des Netzwerks umfasst.

25. Verfahren nach Anspruch 24, in dem die Überwachung durch mehrere verteilte Überwachungsagenten (200) ausgeführt wird, von denen jeder einem oder einer Untermenge der Übertragungswege (Übertragungsweg 1, Übertragungsweg 2, Übertragungsweg 3, Übertragungsweg 4, Übertragungsweg 5) zugeordnet ist, wobei die Überwachungsagenten die Summe der Bandbreiten berechnen, die den tatsächlichen virtuellen Pfaden (VPC1, VPC2) zugewiesen sind, die den oder jeden Übertragungsweg (Übertragungsweg 1) bilden, die Summe mit einer vorher festgelegten Schwelle vergleichen, und, wenn der Vergleich anzeigt, dass es ein Problem gibt, den entsprechenden Agenten des virtuellen Pfades benachrichtigen, dass ein Problem besteht.

26. Verfahren nach Anspruch 24 oder 25, in dem jeder Agent eines virtuellen Pfades (201) nach dem Empfang einer Benachrichtigung über ein Problem durch einen Überwachungsagenten (200) ein Angebot auf Basis der Bandbreite, die verlagert werden soll, und des Umfangs der Ersatzkapazität entlang des neuen Leitwegs (VPC1') erzeugt, nachdem der Agent des virtuellen Pfades einen Leitweg identifiziert hat, wodurch einer der Agenten eines virtuellen Pfades (201) einen neuen Leitweg (VPC1') als Reaktion auf das beste erzeugte Angebot auswählen kann.

27. Verfahren nach Anspruch 26, in dem jeder Agent eines virtuellen Pfades (201) ein Angebot an jeden Agenten eines virtuellen Pfades (201) sendet, der von der Überwachungseinrichtung (200) benachrichtigt wurde, feststellt, ob sein eigenes erzeugtes Angebot das beste Angebot unter allen Angeboten ist, die von allen Agenten von virtuellen Pfaden erzeugt wurden, die von der Überwachungseinrichtung (200) benachrichtigt wurden, und wenn die Feststellung positiv ist, einen Satz von Aktionen einsetzt, um eine Umgehung für den Übertragungsweg (Übertragungsweg 1) zu erzeugen, der das anfängliche Problem verursacht hat.

## Revendications

1. Système de gestion destiné à un réseau à voies virtuelles en mode de transfert asynchrone ATM, dans lequel les connexions physiques sont fournies par des liaisons à large bande (5, liaison 1, liaison 2, liaison 3, liaison 4, liaison 5) entre des commutateurs en mode ATM (1, 2, 3, 4), et comprenant un moyen électronique de traitement de données (7) pouvant être connecté à des commutateurs en mode ATM individuels (1, 2, 3, 4) dans un réseau à voies virtuelles en mode ATM, et pouvant être mis en oeuvre, lorsqu'il est utilisé, pour mesurer une charge actuelle du réseau dans des liaisons individuelles (5) et des voies virtuelles (50-56, VPC1, VPC2) du réseau, **caractérisé en ce que** le moyen électronique de traitement de données (7) comprend en outre des ensembles d'agents logiciels répartis d'intercommunication (30, 31, 32, 200, 201) destinés à exécuter une gestion du réseau en réponse à la charge mesurée et aux exigences de gestion, et **en ce qu'**au moins certains des agents (30, 201) sont chacun associés à une voie respective, ou bien un sous-ensemble, des voies virtuelles (50-56, VPC1, VPC2), du réseau.

2. Système selon la revendication 1, dans lequel une fois que les paramètres initiaux ont été établis, le système fonctionne entièrement en réponse à une charge mesurée et aux exigences de gestion.

3. Système selon la revendication 1 ou 2, dans lequel les agents répartis (30, 31, 32, 200, 201) ne possèdent pas d'état, ni de capacité d'apprentissage.

4. Système selon l'une quelconque des revendications précédentes, dans lequel les agents (30, 31, 32, 200, 201) comprennent trois ensembles d'agents répartis (30, 31, 32) destinés à exécuter une gestion de la bande passante du système, le premier ensemble comprenant des agents (30), dont chacun est associé à une voie respective, ou à un sous-ensemble, des voies virtuelles (50-56) du réseau, un deuxième ensemble d'agents (31) chargé des liaisons physiques (5) et un troisième ensemble d'agents (32) destiné à gérer des événements de performances.

5. Système de gestion selon la revendication 4, dans lequel chaque agent (30) dudit premier ensemble est associé à une pluralité de voies virtuelles (50-56) et est conçu pour répondre à un manque de bande passante dans l'une de ses voies virtuelles associées (50-56) pour engendrer une demande vers un agent (32) dudit troisième ensemble afin d'obtenir de la bande passante.

6. Système de gestion selon la revendication 5, dans lequel chacun des agents (32) du troisième ensemble d'agents est conçu, en réponse à une demande provenant d'un agent (30) du premier ensemble d'agents, pour demander des informations concernant la disponibilité de bande passante sur une ou plusieurs liaisons physiques (5) auprès de un ou plusieurs des agents (31) du deuxième ensemble d'agents, l'agent ou chaque agent (31) du deuxième ensemble d'agents répondant à une demande provenant d'un agent (32) du troisième ensemble d'agents en envoyant à l'agent demandeur (32) des informations spécifiant la bande passante disponible sur sa liaison associée (5).

7. Système de gestion selon la revendication 6, dans lequel, en réponse à des informations de bande passante reçues de l'agent ou de chaque agent (31) dudit deuxième ensemble d'agents, l'agent ou chaque agent (32) du troisième ensemble d'agents est conçu pour donner des instructions à l'agent ou à chaque agent approprié (31) du deuxième ensemble d'agents sur la manière dont la bande passante doit être libérée.

8. Système de gestion selon la revendication 7, dans lequel l'agent ou chaque agent (31) dudit deuxième ensemble d'agents recevant ainsi des instructions d'un agent (32) dudit troisième ensemble d'agents est conçu pour calculer la bande passante à libérer en réponse à la demande et pour envoyer à l'agent du troisième ensemble (32) une instruction concernant la quantité de bande passante à libérer et l'identité ou les identités de la voie ou des voies virtuelles (50-56) à partir desquelles la bande passante doit être libérée.

9. Système de gestion selon la revendication 8, dans lequel, en réponse aux instructions reçues de l'agent ou de chaque agent du deuxième ensemble (31), l'agent du troisième ensemble (32) est conçu pour donner des instructions à l'agent du premier ensemble (30) qui a effectué la demande centralisée pour augmenter la bande passante afin de satisfaire ses exigences, et pour donner des instructions à l'agent ou à chaque agent du premier ensemble (30), identifié par l'agent ou chaque agent du deuxième ensemble (31) qui a exécuté les calculs de bande passante, pour réduire sa bande passante afin de satisfaire les exigences de l'agent du premier ensemble effectuant une demande centralisée.

10. Système de gestion selon l'une quelconque des revendications précédentes, comprenant.en outre un moyen de surveillance (200) destiné à déterminer si un problème de bande passante existe sur une liaison ou des liaisons (liaison 1, liaison 2, liaison 3, liaison 4, liaison 5) du réseau et destiné à notifier à un ou plusieurs agents d'une pluralité d'agents de voies virtuelles (201) dont chacun est associé à une voie respective, ou à un sous-ensemble, des voies virtuelles (VPC1, VPC2) du réseau, dans lequel les agents de voies virtuelles (201) sont en outre conçus pour identifier un nouvel itinéraire (VPC1') au travers du réseau qui, à la fois, évite la liaison à problème (liaison 1) et possède une capacité en réserve, et dans lequel le système comprend en outre un moyen (201) destiné à sélectionner l'itinéraire identifié (VPC1') et à créer une nouvelle connexion de voie virtuelle (VPC1') sur une liaison ou un certain nombre de liaisons (liaison 2, liaison 3) du réseau.

11. Système selon la revendication 10, dans lequel ledit moyen de surveillance (200) est conçu pour calculer la somme des bandes passantes allouées à des connexions de voies virtuelles (VPC1, VPC2) qui utilisent la liaison (liaison 1), pour comparer la somme à un seuil prédéterminé, et pour notifier à l'agent ou à chaque agent de voie virtuelle (201) associé aux voies virtuelles (VPC1, VPC2) de la liaison (liaison 1) qu'il existe un problème.

12. Système selon la revendication 11, dans lequel ledit moyen de surveillance (200) comprend une pluralité d'agents de surveillance répartis (200), un agent de surveillance (200) existant pour chaque liaison (liaison 1, liaison 2, liaison 3, liaison 4, liaison 5).

13. Système selon l'une quelconque des revendications 10 à 12, dans lequel chaque agent de voie virtuelle (201) est conçu pour engendrer, à la réception d'une notification d'un problème par ledit moyen de surveillance (200), une tentative de prise fondée sur les bandes passantes à déplacer et la quantité de capacité en réserve le long du nouvel itinéraire (VPC1') après que l'agent de voie virtuelle (201) a identifié un itinéraire, grâce à quoi l'un des agents de voies virtuelles (201) peut sélectionner un nouvel itinéraire (VPC1') en réponse à la meilleure tentative de prise engendrée.

14. Système selon la revendication 13, dans lequel chaque agent de voie virtuelle (201) est conçu pour envoyer une tentative de prise à chaque agent de voie virtuelle (201) ayant reçu une notification dudit moyen de surveillance (200), pour déterminer si sa propre tentative de prise engendrée est la meilleure tentative de prise parmi toutes celles engendrées par tous les agents de voies virtuelles ayant reçus une notification dudit moyen de surveillance (200), et, si la détermination est positive, pour mettre en oeuvre un ensemble d'actions pour créer un contournement de la liaison (liaison 1) qui a provoqué le problème initial.

15. Procédé de gestion d'un réseau à voies virtuelles en mode de transfert asynchrone, ATM, dans lequel les connexions physiques sont fournies par des liaisons à large bande (5, liaison 1, liaison 2, liaison 3, liaison 4, liaison 5) entre des commutateurs en mode ATM (1, 2, 3, 4), et comprenant un moyen électronique de traitement de données (7) pouvant être connecté à des commutateurs en mode ATM individuels (1, 2, 3, 4) dans un réseau à voies virtuelles en mode ATM, le procédé comprenant l'utilisation d'un moyen de traitement de données électronique pour mesurer une charge actuelle du réseau dans des liaisons individuelles (5) et des voies virtuelles (50-56, VPC1, VPC2) du réseau, **caractérisé par** l'utilisation d'ensembles d'agents logiciels répartis d'intercommunication (30, 31, 32, 200, 201) s'exécutant sur le moyen électronique de traitement de données (7) pour exécuter la gestion du réseau en réponse à la charge mesurée et aux exigences de gestion, et en ce qu'au moins certains des agents (30, 201) sont chacun associés à une voie respective, ou un sous-ensemble, des voies virtuelles (50-56, VPC1, VPC2) du réseau.

16. Procédé selon la revendication 15, dans lequel, une fois que les paramètres initiaux ont été initialisés, la gestion du réseau fonctionne entièrement en réponse à une charge mesurée et aux exigences de gestion.

17. Procédé selon la revendication 15 ou la revendication 16, dans lequel les agents répartis n'ont pas d'état, ni de capacité d'apprentissage.

18. Procédé selon l'une quelconque des revendications 15 à 17, dans lequel les agents (30, 31, 32, 200, 201) comprennent trois ensembles d'agents répartis (30, 31, 32) destinés à exécuter une gestion de la bande passante du système, le premier ensemble comprenant des agents (30), dont chacun est associé à une voie respective, ou à un sous-ensemble, des voies virtuelles (50-56) du réseau, un deuxième ensemble d'agents (31) chargé des liaisons physiques (5), et un troisième ensemble d'agents (32) destiné à gérer des événements de performances.

19. Procédé selon la revendication 18, dans lequel chaque agent (30) dudit premier ensemble est associé à une pluralité de voies virtuelles (50-56) et répond à un manque de bande passante dans l'une de ses voies virtuelles associées (50-56) en engendrant une demande vers un agent (32) dudit troisième ensemble afin d'obtenir de la bande passante.

20. Procédé selon la revendication 19, dans lequel chacun des agents (32) du troisième ensemble d'agents, en réponse à une demande provenant d'un agent (30) du premier ensemble d'agents, demande des informations concernant la disponibilité de bande passante sur une ou plusieurs liaisons physiques (5) auprès de un ou plusieurs des agents (31) du deuxième ensemble d'agents, et dans lequel l'agent ou chaque agent (31) du deuxième ensemble d'agents répond à une demande provenant d'un agent (32) du troisième ensemble d'agents en envoyant à l'agent demandeur (32) des informations spécifiant la bande passante disponible sur sa liaison associée (5).

21. Procédé selon la revendication 20, dans lequel, en réponse à des informations de bande passante reçues de l'agent ou de chaque agent (31) dudit deuxième ensemble d'agents, l'agent ou chaque agent (32) du troisième ensemble d'agents donne des instructions à l'agent ou à chaque agent approprié (31) du deuxième ensemble d'agents sur la manière dont la bande passante doit être libérée.

22. Procédé selon la revendication 21, dans lequel l'agent ou chaque agent (31) dudit deuxième ensemble d'agents ayant ainsi reçu des instructions d'un agent (32) dudit troisième ensemble d'agents, calcule la bande passante à libérer en réponse à la demande et envoie à l'agent du troisième ensemble (32) une instruction concernant la quantité de bande passante à libérer et l'identité ou les identités de la voie ou des voies virtuelles (50-56) à partir desquelles la bande passante devrait être libérée.

23. Procédé selon la revendication 22, dans lequel, en réponse aux instructions reçus de l'agent ou de chaque agent du deuxième ensemble (31), l'agent du troisième ensemble (32) donne des instructions à l'agent du premier ensemble (30) qui a effectué la demande centralisée pour augmenter la bande passante afin de satisfaire ces exigences, et donne des instructions à l'agent ou à chaque agent du premier ensemble (30), identifié par l'agent ou chaque agent du deuxième ensemble (31) qui a exécuté les calculs de bande passante, pour réduire sa bande passante afin de satisfaire les exigences de l'agent du premier ensemble (30) effectuant une demande centralisée.

24. Procédé selon l'une quelconque des revendications 15 à 23, comprenant en outre une détermination pour savoir si un problème de bande passante existe sur une liaison ou des liaisons (liaison 1, liaison 2, liaison 3, liaison 4, liaison 5) du réseau et une notification à un ou plusieurs agents d'une pluralité d'agents de voies virtuelles (201), dont chacun est associé à une voie respective, ou à un sous-ensemble, des voies virtuelles (VPC1, VPC2) du réseau, et dans lequel chaque agent de voie virtuelle ayant ainsi reçu une notification (201) tente d'identifier un nouvel itinéraire (VPC1') au travers du réseau qui, à la fois, évite la liaison à problème (liaison 1) et présente une capacité de réserve, et dans lequel le procédé comprend en outre la sélection de l'itinéraire identifié (VPC1') et la création d'une nouvelle connexion de voie virtuelle (VPC1') sur une liaison ou un certain nombre de liaisons (liaison 2, liaison 3) du réseau.

25. Procédé selon la revendication 24, dans lequel ladite surveillance est exécutée par une pluralité d'agents de surveillance répartis (200), dont chacun est associé à une liaison respective ou un sous-ensemble des liaisons (liaison 1, liaison 2, liaison 3, liaison 4, liaison 5), lesquels agents de surveillance (201) calculent la somme de la bande passante allouée aux voies virtuelles effectives (VPC1, VPC2) qui constituent la liaison ou chaque liaison (liaison 1), comparent la somme à un seuil prédéterminé, et, si la comparaison indique qu'il existe un problème, notifient aux agents de voies virtuelles respectives (201) qu'il existe un problème.

26. Procédé selon la revendication 24 ou la revendication 25, dans lequel chaque agent de voie virtuelle (201), à la réception d'une notification d'un problème par un agent de surveillance (200), génère une tentative de prise d'après la bande passante à déplacer et la valeur de capacité de réserve en suivant le nouvel itinéraire (VPC1'), après que l'agent de voie virtuelle a identifié un itinéraire, grâce à quoi l'un des agents de voies virtuelles (201) peut sélectionner un nouvel itinéraire (VPC1') en réponse à la meilleure tentative de prise engendrée.

27. Procédé selon la revendication 26, dans lequel chaque agent de voie virtuelle (201), envoie une tentative de prise à chaque agent de voie virtuelle (201) ayant reçu une notification par ledit moyen de surveillance (200), détermine si sa propre tentative de prise engendrée est la meilleure tentative de prise parmi toutes celles engendrées par tous les agents de voies virtuelles (201) ayant reçu une notification par ledit moyen de surveillance (200) et, si la détermination est positive, met en oeuvre un ensemble d'actions pour créer un contournement de la liaison (liaison 1) qui a provoqué le problème initial.
